# EUROPEAN PATENT SPECIFICATION

(11) **EP 2 969 360 B1**
(45) Date of publication and mention of the grant of the patent: **22.08.2018**
(21) Application number: 13820878.0
(22) Date of filing: 10.12.2013
(51) Int. Cl.: B23K 9/32, A61F 9/06, F16P 1/06, G01J 1/58, G01J 1/42, B23K 9/095, B23K 9/10, G09B 19/00, G09B 19/24

(54) **SIMULATOR FOR FACILITATING VIRTUAL ORBITAL WELDING ACTIVITY**
AUF EINER VIRTUELLEN REALITÄT BASIERENDER ORBITAL-VERSCHWEISSUNGSSIMULATOR
SIMULATEUR D'ACTIVITE DE SOUDAGE ORBITAL PAR RÉALITÉ VIRTUELLE

(30) Priority: 11.03.2013 US 201313792294
(43) Date of publication of application: 20.01.2016
(73) Proprietor: Lincoln Global, Inc., Santa Fe Springs, CA 90670 (US)
(72) Inventor: POSTLETHWAITE, Deanna, Sparks, NV 89436 (US); WALLACE, Matthew, Wayne, South Windsor, CT 06074 (US); ZBORAY, David, Anthony, Trumbull, CT 06611 (US); LENKER, Zachary, Steven, Vernon, CT 06066 (US)
(74) Representative: Grosse Schumacher Knauer von Hirschhausen
(86) International application number: PCT/IB2013/002724
(87) International publication number: WO 2014/140682

(56) References cited:
- JP-A- 2012 024 867
- US-A1- 2010 062 406
- US-B1- 6 492 618

## Description

The present invention relates to a simulator for facilitating virtual orbital welding activity, and more particularly to virtual welding environments that emulate the welding of pipe and open root joints in real time and the setup thereof.

### BACKGROUND OF THE INVENTION

For decades companies have been teaching welding skills. Traditionally, welding has been taught in a real world setting, that is to say that welding has been taught by actually striking an arc with an electrode on a piece of metal. Instructors, skilled in the art, oversee the training process making corrections in some cases as the trainee performs a weld. By instruction and repetition, a new trainee learns how to weld using one or more processes. However, costs are incurred with every weld performed, which varies depending on the welding process being taught.

In more recent times, cost saving systems for training welders have been employed. Some systems incorporate a motion analyzer. The analyzer includes a physical model of a weldment, a mock electrode and sensing means that track movement of the mock electrode. A report is generated that indicates to what extent the electrode tip traveled outside an acceptable range of motion. More advanced systems incorporate the use of virtual reality, which simulates manipulation of a mock electrode in a virtual setting. Similarly, these systems track position and orientation. Such systems teach only muscle memory, but cannot teach the more advanced welding skills required of a skilled welder.

US2010/062406, representing the most relevant prior art, describes a simulator for facilitating virtual welding activity, comprising: a logic processor based subsystem operable to execute coded instructions for generating an interactive orbital welding environment that emulates welding set-up and activity on a section of virtual pipe having at least one virtual weld joint; displaying means operatively connected to the logic processor based subsystem for visually depicting the interactive welding environment, wherein said displaying means depicts the section of virtual pipe; a pendant or hand-held input device for performing set-up and virtual welding activity on the at least one virtual weld joint in real time.

### BRIEF SUMMARY

A simulator for facilitating virtual orbital welding according to the present invention is defined in claim 1. The input device will emulate controls for input selection for virtual reality welding. The logic processor based subsystem may further include restricting controls or interactions based on a user to enhance learning objectives. The logic processor based subsystem may optionally include teaching interaction or reactions based on visual, audible, physical changes to ensure that the user can properly setup an orbital welding environment or can effect error recovery. The logic processor based subsystem often will include virtual calculators or tables that allow input and provide an output based on entered values. The logic processor based subsystem may also include intelligent agent-enabled results based on incorrect setup parameters or combination of parameters. The logic processor based subsystem may also include intelligent agent-enabled input to identify the proper setup parameters or combination of parameters which should have been entered by the user. The simulator may also include visual, audio or physical indicators of the setup parameters or combination of parameters. A camera-based system may be optionally added to track a path of the orbital weld. The camera system may include path-following and path-determinative systems based upon a fuzzy logic controller-based system. The simulator's logic processor based subsystem may include multiple levels for a user, each level adapted to the skill level, learning pace and learning style of the user and artificial intelligence based fault instruction in order to test a user's ability to detect, correct and recover from problems. Multi-language capabilities are also an optional aspect of the invention.

### BRIEF DESCRIPTION OF THE DRAWINGS

Figure 1 is a perspective view of an end user operator engaging in virtual welding activity with a simulator;
Figure 2 is a front view of a simulator;
Figure 3a is a chart showing pipe welding positions;
Figure 3b is a chart showing plate welding positions;
Figure 4 is an exemplary schematic block diagram of a representation of a simulator;
Figure 5 is a side perspective view of a mock welding tool;
Figure 6 is a close up view of welding user interface;
Figure 6a is a close up view of an observer display device;
Figure 7a is perspective view of a personalized display device;
Figure 7b is perspective view of a personalized display device worn by an end user;
Figure 7c is perspective view of a personalized display device mounted in a welding helmet;
Figure 8 is a perspective view of a spatial tracker;
Figure 9 is a perspective view of a stand for holding welding coupons;
Figure 9a is a perspective view of a pipe welding coupon;
Figure 9b is a perspective view of a pipe welding coupon mounted into the stand.
Figure 10 illustrates an example of a subsystem block diagram of a logic processor-based subsystem;
Figure 11 illustrates an example of a block diagram of a graphics processing unit (GPU) of the logic processor-based subsystem;
Figure 12 illustrates an example of a functional block diagram of the simulator;
Figure 13 is a flow chart of a method of training using the virtual reality training system;
Figures 14a-14b illustrate the concept of a welding pixel (wexel) displacement map;
Figure 15 illustrates an example of a coupon space and a weld space of a flat welding coupon simulated in the simulator;
Figure 16 illustrates an example of a coupon space and a weld space of a corner welding coupon simulated in the simulator;
Figure 17 illustrates an example of a coupon space and a weld space of a pipe welding coupon simulated in the simulator;
Figure 18 illustrates an example of the pipe welding coupon;
Figures 19a-19c illustrate an example of the concept of a dual-displacement puddle model of the simulator; and
Figure 20 illustrates an embodiment of an orbital welding system as used in an orbital welding environment;
Figure 21 illustrates a welding tractor for use with the orbital welding system of Figure 20;
Figure 22 illustrates a power source and controller of the orbital welding system of Figure 20; and
Figure 23 illustrates a pendant for use with the orbital welding system of Figure 20.

### DETAILED DESCRIPTION OF THE INVENTION

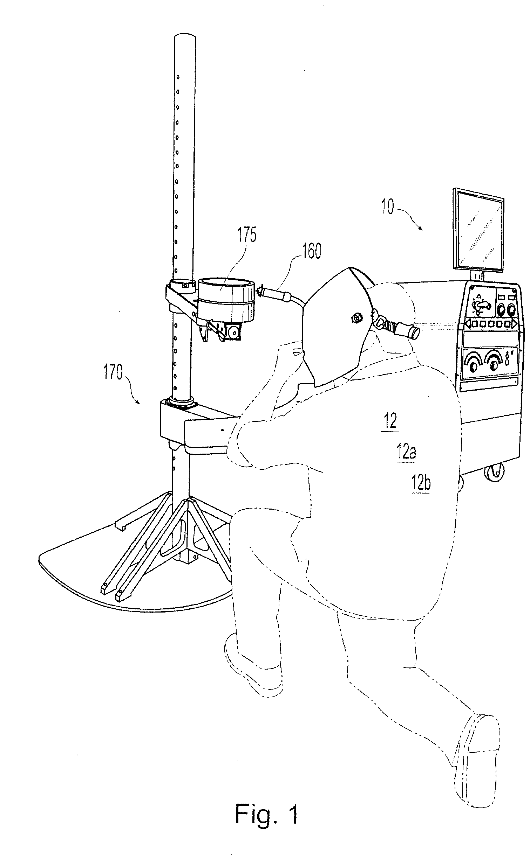

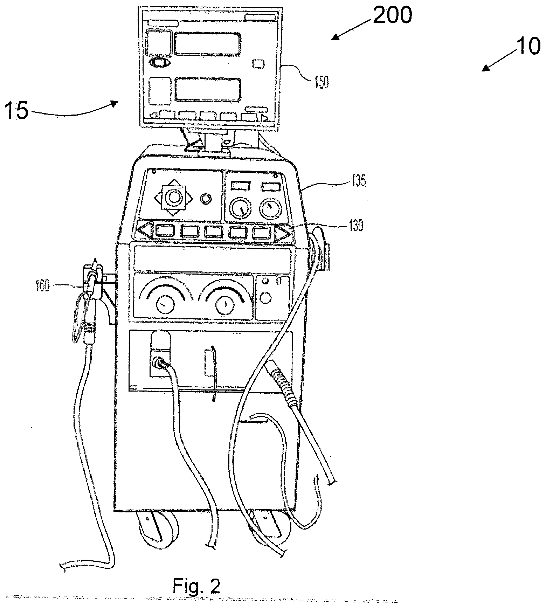

Referring now to the drawings wherein the showings are for purposes of illustrating examples or embodiments of the invention only and not for purposes of limiting the same, Figures 1 and 2 show a system for simulating welding depicted generally at 10, termed herein as simulator 10 or system 10. Simulator 10 is capable of generating a virtual environment **15,** which may depict a welding setting similar to that in the real world, and may be known as virtual reality arc welding (VRAW). Within the virtual environment **15,** simulator **10** facilitates interaction with one or more end user(s) **12.** An input device **155** is included that allows an end user **12** to engage in real-world activity, which is tracked by the simulator **10** and translated into virtual activity. The virtual environment **15** thus comprises an interactive virtual welding environment **15.** A displaying device **200** is included that provides visual access into the virtual environment **15** and the end user's **12** activity. In one embodiment, simulator **10** may include a display screen **150** viewable by a plurality of end users **12** or other observers. Additionally, simulator **10** may include a personalized display **140** adapted for use by a single end user **12,** which may be a trainee user **12a** or an instructor user **12b.** It is expressly noted here that the end user's **12** activity in the real world is translated into virtual welding activity and viewed on one or more displays **140, 150** in real-time. As used herein, the term "real-time" means perceiving and experiencing, in time, a virtual environment in the same way that an end user **12** would perceive and experience, in time, in a real-world setting.

In generating an interactive virtual welding environment **15,** simulator **10** emulates one or more welding processes for a plurality of weld joints in different welding positions, and additionally emulates the effects of different kinds of electrodes for the plurality of joint configurations. In one particular embodiment, simulator **10** generates an interactive virtual welding environment **15** that emulates pipe welding and/or welding of open root joints. The system is capable of simulating a weld puddle having real-time molten metal fluidity and heat dissipation characteristics. The simulator **10** is also capable of modeling how virtual welding activity affects the weld joint, e.g. the underlying base material. Illustratively, simulator **10** may emulate welding a root pass and a hot pass, as well as subsequent filler and cap passes, each with characteristics paralleling real-world scenarios. Each subsequent pass may weld significantly different from that of the previous pass as a result of changes in the base material made during the previous pass and/or as a result of a differently selected electrode. Real-time feedback of the puddle modeling allows the end user **12** to observe the virtual welding process on the display **200** and adjust or maintain his/her technique as the virtual weld is being performed. Examples of the kinds of virtual indicators observed may include: flow of the weld puddle, shimmer of molten puddle, changes in color during puddle solidification, freeze rate of the puddle, color gradients of heat dissipation, sound, bead formation, weave pattern, formation of slag, undercut, porosity, spatter, slag entrapment, overfill, blowthrough, and occlusions to name a few. It is to be realized that the puddle characteristics are dependent upon, that is to say responsive to, the end user's **12** movement of the input device **155.** In this manner, the displayed weld puddle is representative of a real-world weld puddle formed in real-time based on the selected welding process and on the end user's **12** welding technique. Furthermore, "wagon tracks" is the visual trail of weld defects and slag left behind in the toes of the root pass made during pipe welding using the SMAW process. The second pass in pipe welding, called the hot pass, must be hot enough to remelt the wagon tracks so they are eliminated in the final weldment. Also, wagon tracks may be removed by a grinding process. Such wagon tracks and elimination of the wagon tracks are properly simulated in the simulator **10** described herein.

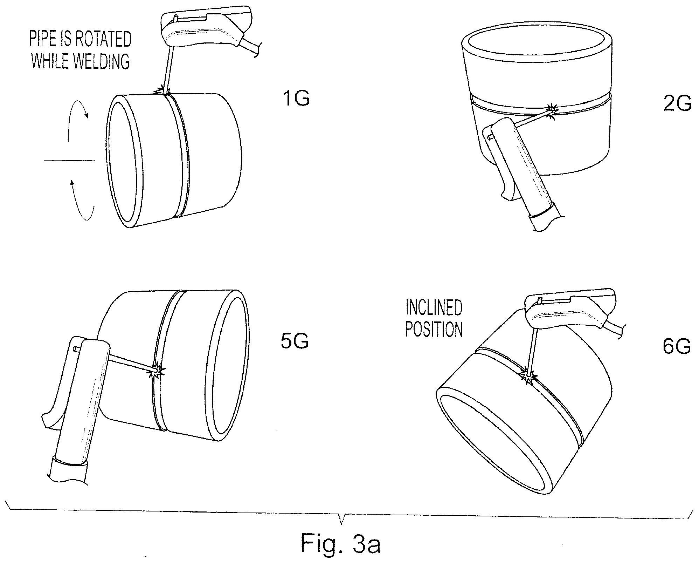

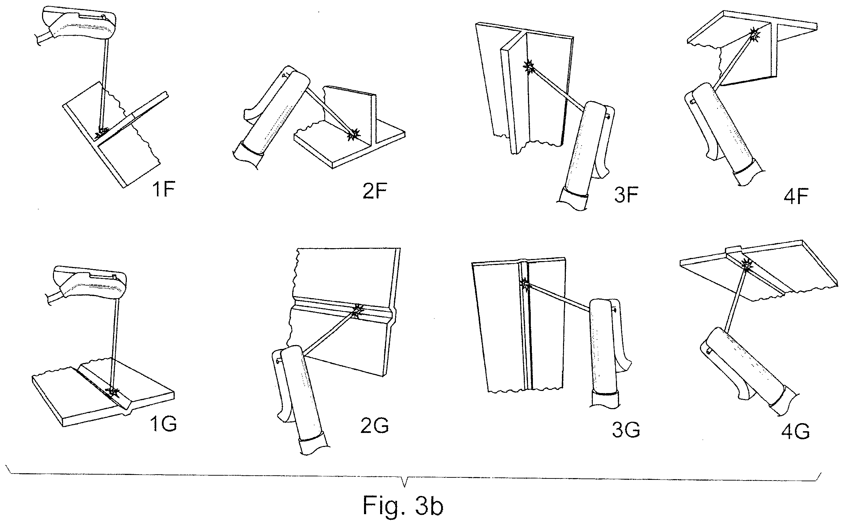

With continued reference to Figures 1 and 2 and now also to Figure 3a and 3b, simulator **10** may emulate welding processes in various welding positions and models how the weld puddle reacts in each position. More specifically, simulator **10** may emulate pipe welding in vertical, horizontal and/or inclined positions referred to in the art respectively as the 5G, 2G and 6G positions. Additionally, simulator **10** may emulate welding in a 1G position which relates to the rotating horizontal position of the pipe, or in a 4G position which relates to welding overhead as may be associated with a groove weld in abutting plates. Other welding positions may relate to the welding of open root joints for various configurations of flat plate. It is to be understood that the simulator **10,** including a modeling and analysis engine to be described in detail in subsequent paragraphs, takes into account the effects of gravity on the weld puddle. Accordingly, the weld puddle reacts differently, for example, for a welding pipe in a 5G position from that of a 6G position. The examples above are not to be construed as limiting, but are included for illustrative purposes. Those skilled in the art will readily understand its application to any weld joint, welding position, or type of weldment including different kinds of base material.

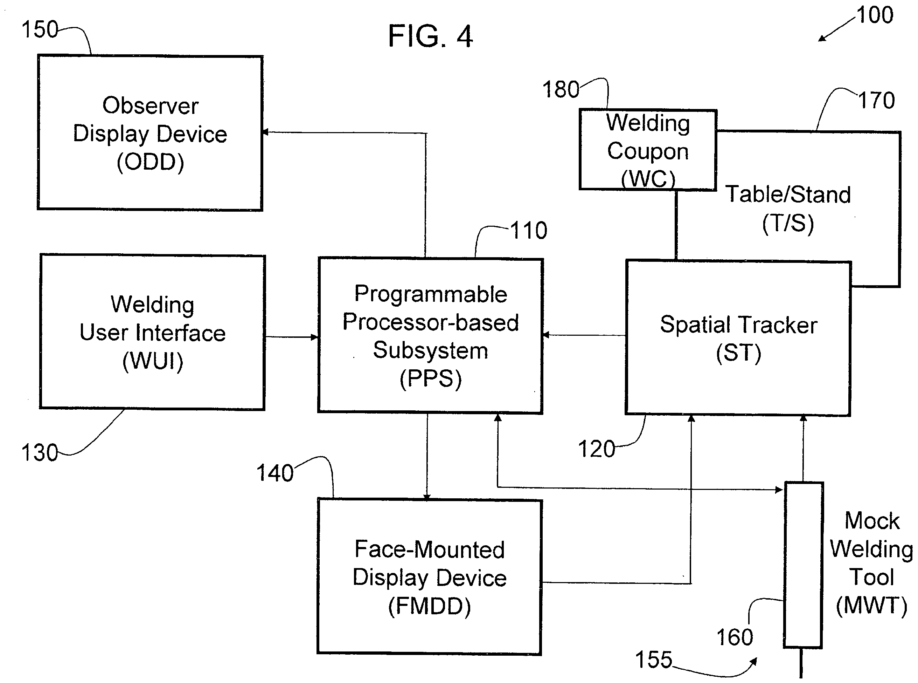

With reference now to Figures 2 and 4, simulator **10** includes a logic processor-based subsystem **110,** which may be programmable and operable to execute coded instructions for generating the interactive virtual welding environment **15.** Simulator **10** further includes sensors and/or sensor systems, which may be comprised of a spatial tracker **120,** operatively connected to the logic processor-based subsystem **110.** Simulator **10** also includes a welding user interface **130** in communication with the logic processor-based subsystem **110** for set up and control of the simulator **10.** As referenced above, displaying device(s) **200** are included, which may comprise a face-mounted display device **140** and an observer display device **150** each connected to the logic processor-based subsystem **110** providing visual access to the interactive virtual welding environment **15.** One or more of the displaying devices **200** may be connected to the spatial tracker **120** for changing the images viewed on the device in response to its position and/or movement thereof, as described below.

### INPUT DEVICE

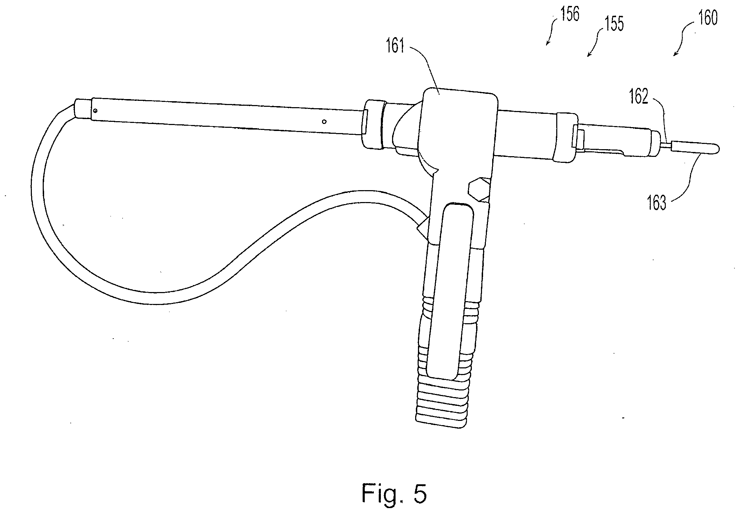

With reference now to Figure 5, as mentioned above, simulator **10** includes an input device **155** that facilitates interaction with the end-user **12.**
Input device **155** comprises a mock welding tool 160. The mock welding tool **160** may be fashioned to resemble a real-world welding tool, like for example, a manual welding electrode holder or a weld gun delivering a continuous feed to electrode, i.e. MIG, FCAW, or GTAW welding tools. Still, other configurations of the mock welding tool **160** may be implemented without departing from the intended scope of coverage of the embodiments of the subject invention. For discussion purposes,
it
will be described in the context of using a mock welding tool **160** that resembles a manual welding electrode holder **156.** The mock welding tool **160** may closely resemble a real world welding tool. In one particular
case,
mock welding tool **160** may have the same shape, weight and feel as a real-world welding tool. In fact, a real welding tool could be used as the mock welding tool **160** to provide the actual feel of the tool in the user's hands, even though, in the simulator **10,** the real welding tool would not be used to actually create a real arc. In this manner, end-user **12,** which may be a trainee user **12a,** becomes accustomed to handling a real-world welding tool thereby enhancing the virtual welding experience. However, the mock welding tool **160** may be constructed in any manner chosen with sound judgment.

Illustratively, mock welding tool **160** simulates a stick welding tool for pipe welding and includes a holder **161** and a simulated stick electrode **162** extending therefrom. The simulated stick electrode **162** may include a tactilely resistive tip **163** to simulate resistive feedback that occurs during welding in a real-world setting. If the end user **12** moves the simulated stick electrode **162** too far back out of the root (described in detail below), the end user **12** will be able to feel or sense the reduced resistance thereby deriving feedback for use in adjusting or maintaining the current welding process. It is contemplated that the stick welding tool may incorporate an actuator, not shown, that withdraws the simulated stick electrode **162** during the virtual welding process. That is to say that as end user **12** engages in virtual welding activity, the distance between holder **161** and the tip of the simulated stick electrode **162** is reduced to simulate consumption of the electrode. The consumption rate, i.e. withdrawal of the stick electrode **162,** may be controlled by the logic processor-based subsystem **110** and more specifically by coded instructions executed by the logic processor-based subsystem **110.** The simulated consumption rate may also depend on the end user's **12** technique. It is noteworthy to mention here that as simulator **10** facilitates virtual welding with different types of electrodes, the consumption rate or reduction of the stick electrode **162** may change with the welding procedure used and/or setup of the simulator **10.**

The actuator of the mock welding tool **160** may be electrically driven. Power for engaging the actuator may come from the simulator **10,** from an external power source or from internal battery power. In one case, the actuator may be an electromotive device, such as an electric motor. Still, any type of actuator or form of motive force may be used including, but not limited to: electromagnetic actuators, pneumatic actuators, mechanical or spring-loaded actuators, in any combination thereof.

As indicated above, the mock welding tool **160** may work in conjunction with the spatial tracker for interacting with the simulator **10.** In particular, the position and/or orientation of mock welding tool **160** may be monitored and tracked by the spatial tracker **120** in real time. Data representing the position and orientation may therefore be communicated to the logic processor-based subsystem **110** and modified or converted for use as required for interacting with the virtual welding environment **15.**

### SPATIAL TRACKER

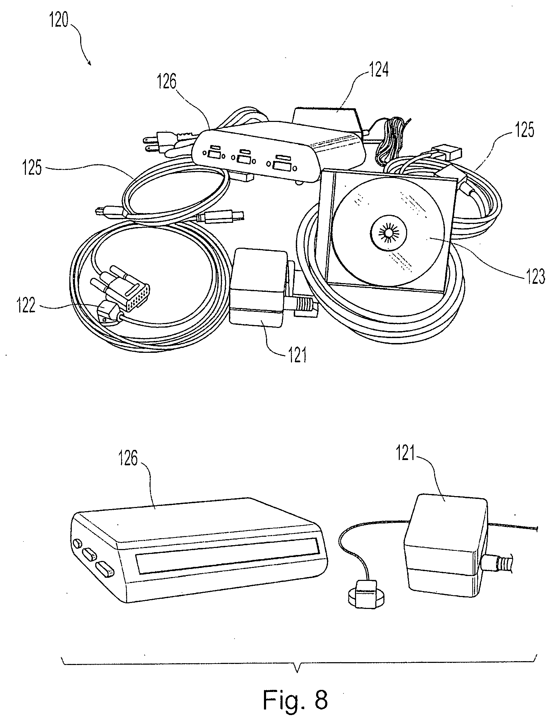

Referencing Figure 8, an example of a spatial tracker **120** is illustrated. Spatial tracker **120** may interface with the logic processor-based subsystem **110.** In one
case,
the spatial tracker **120** may track the mock welding tool **160** magnetically. That is to say that the spatial tracker generates a magnetic envelope, which is used to determine position and orientation, as well as speed and/or changes in speed. Accordingly, the spatial tracker **120** includes a magnetic source **121** and source cable, one or more sensors **122,** host software on disk **123,** a power source **124,** USB and RS-232 cables **125,** a processor tracking unit **126,** and other associated cables. The magnetic source **121** is capable of being operatively connected to the processor tracking unit **126** via cables, as is sensor **122.** The power source **124** is also capable of being operatively connected to the processor tracking unit **126** via a cable. The processor tracking unit **126** is capable of being operatively connected to the logic processor-based subsystem **110** via a USB or RS-232 cable **125.** The host software on disk **123** may be loaded onto the logic processor-based subsystem **110** and allows functional communication between the spatial tracker **120** and the logic processor-based subsystem **110.**

The magnetic source **121** creates a magnetic field, or envelope, surrounding the source **121** defining a three dimensional space within which end user **12** activity may be tracked for interacting with the simulator **10.** The envelope establishes a spatial frame of reference. Objects used within the envelope, e.g. mock welding tool **160** and coupon stand (described below), may be comprised of non-metallic, i.e. non-ferric and non-conductive, material so as not to distort the magnetic field created by the magnetic source **121.** The sensor **122** may include multiple induction coils aligned in crossing spatial directions, which may be substantially orthogonally aligned. The induction coils measure the strength of the magnetic field in each of the three directions providing information to the processor tracking unit **126.** In one
case, the sensor **122** may be attached to the mock welding tool **160** allowing the mock welding tool **160** to be tracked with respect to the spatial frame of reference in both position and orientation. More specifically, the induction coils may be mounted in the tip of the electrode **162.** In this way, simulator **10** is able to determine where within the three dimensional envelope the mock welding tool **160** is positioned. Additional sensors **122** may be provided and operatively attached to the one or more displaying devices **200.** Accordingly, simulator **10** may use sensor data to change the view seen by the end user **12** responsive to the end user's **12** movements. As such, the simulator **10** captures and tracks the end user's **12** activity in the real world for translation into the virtual welding environment **15.**

In an alternative
example, the sensor(s) **122** may wirelessly interface to the processor tracking unit **126,** and the processor tracking unit **126** may wirelessly interface to the logic processor-based subsystem **110.** In alternative
examples, other types of spatial trackers **120** may be used in the simulator **10** including, for example, an accelerometer/gyroscope-based tracker, an optical tracker, an infrared tracker, an acoustic tracker, a laser tracker, a radio frequency tracker, an inertial tracker, an active or passive optical tracker, and augmented reality based tracking. Still, other types of trackers may be used.

### DISPLAYING DEVICE

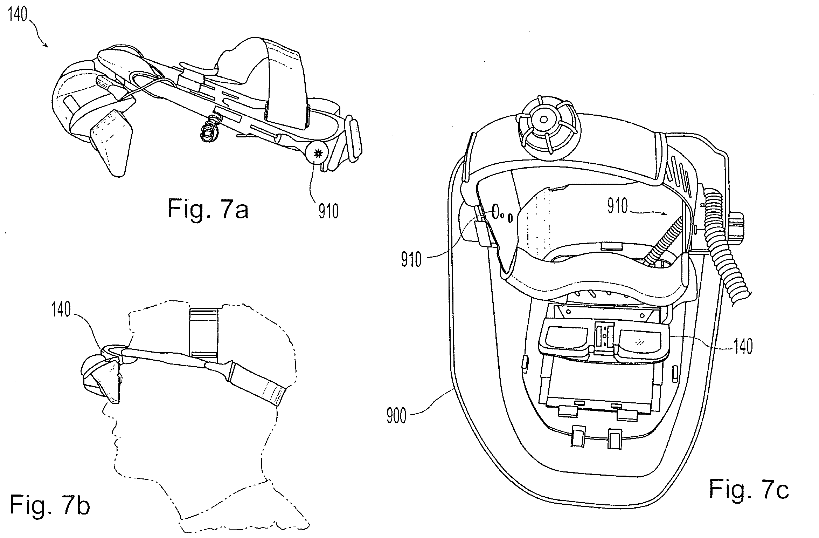

With reference now to Figure 7a, an example of the face-mounted display device **140** will now be described. The face mounted display device **140** may be integrated into a welding helmet **900,** as shown in Figure 7c or alternatively may be separately mounted as shown in Figure 7b. The face mounted display device **140** may include two high-contrast SVGA 3D OLED micro-displays capable of delivering fluid full-motion video in the 2D and frame sequential video modes. Virtual images, e.g. video, from the virtual welding environment **15** is provided and displayed on the face mounted display device **140.** In
an example,
the logic processor-based subsystem **110** provides stereoscopic video to the face mounted display device **140,** enhancing the depth perception of the user. Stereoscopic images may be produced by a logic processing unit, which may be a graphics processing unit described in detail below. A zoom, e.g., 2X, mode may also be provided, allowing a user to simulate a cheater plate. The face mounted display device **140** operatively connects to the logic processor-based subsystem **110** and the spatial tracker **120** via wired or wireless means. A sensor **122** of the spatial tracker **120** may be attached to the face mounted display device **140** or to the welding helmet **900** thereby allowing the face mounted display device **140** to be tracked with respect to the 3D spatial frame of reference created by the spatial tracker **120.** In this way, movement of the welding helmet **900** responsively alters the image seen by the end user **12** in a three dimensional virtual reality setting.

The face mounted display device **140** may also function to call up and display menu items similar to that of observer display device **150,** as subsequently described. In this manner, an end user is therefore able to use a control on the mock welding tool **160** (e.g., a button or switch) to activate and select options from the menu. This may allow the user to easily reset a weld if he makes a mistake, change certain parameters, or back up to re-do a portion of a weld bead trajectory, for example.

The face mounted display device **140** may further include speakers **910,** allowing the user to hear simulated welding-related and environmental sounds produced by the simulator **10.** Sound content functionality and welding sounds provide particular types of welding sounds that change depending on if certain welding parameters are within tolerance or out of tolerance. Sounds are tailored to the various welding processes and parameters. For example, in a MIG spray arc welding process, a crackling sound is provided when the user does not have the mock welding tool **160** positioned correctly, and a hissing sound is provided when the mock welding tool **160** is positioned correctly. In a short arc welding process, a hissing sound is provided when undercutting is occurring. These sounds mimic real world sounds corresponding to correct and incorrect welding technique.

High fidelity sound content may be taken from real world recordings of actual welding using a variety of electronic and mechanical means. The perceived volume and direction of the sound is modified depending on the position, orientation, and distance of the end user's head, i.e. the face mounted display device **140,** with respect to the simulated arc between the mock welding tool **160** and the welding coupon **175.** Sound may be provided to the user via speakers **910,** which may be earbud speakers or any other type of speakers or sound generating device, mounted in the face mounted display device **140** or alternatively mounted in the console **135** and/or stand **170.** Still, any manner of presenting sound to the end user **12** while engaging in virtual welding activity may be chosen. It is also noted here that other types of sound information may be communicated through the speakers **910.** Examples include verbal instructions from the instructor user **12b,** in either real time or via prerecorded messages. Prerecorded messages may be automatically triggered by particular virtual welding activity. Real time instructions may be generated on site or from a remote location. Still, any type of message or instruction may be conveyed to end user **12.**

### CONSOLE

With reference now to Figures 2, 6 and 7, the simulator **10** may include a console **135** housing one or more components of the simulator **10.** In an example, the console **135** may be constructed to resemble a welding power source. That is to say that the shape and size of the console **135** may match that of a real-world device. Operation of the simulator **10** may be facilitated by a welding unit interface **130,** which may be fashioned to resemble welding power source knobs, dials and/or switches **133, 134.** Simulator **10** may further include a display, which may be displaying device **200.** Coded instructions, i.e. software, installed onto the simulator **10** may direct the end user's **12** interaction with the simulator **10** by displaying instructions and/or menu options on the display screen **200.** Interaction with the simulator **10** may include functions relating to: administrative activity or simulation set up and activation. This may include selection of a particular welding process and electrode type, as well as part set up including welding position. Selections made by way of welding unit interface **130** are reflected on the displaying device **200.**

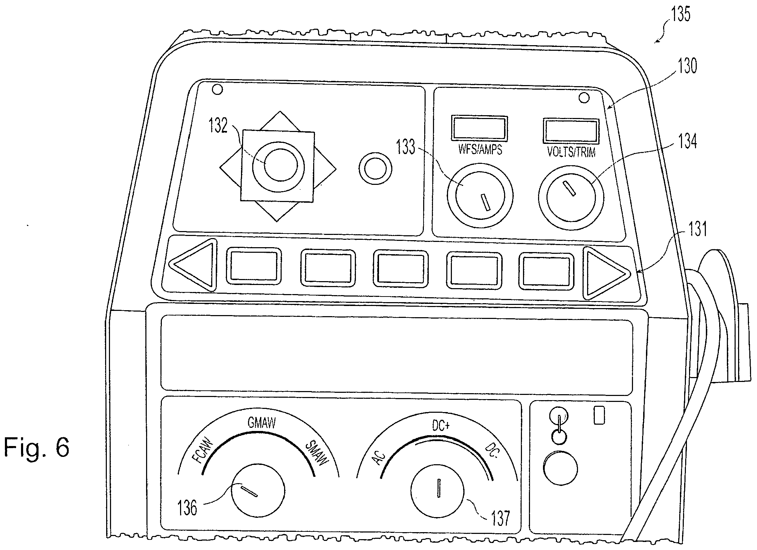

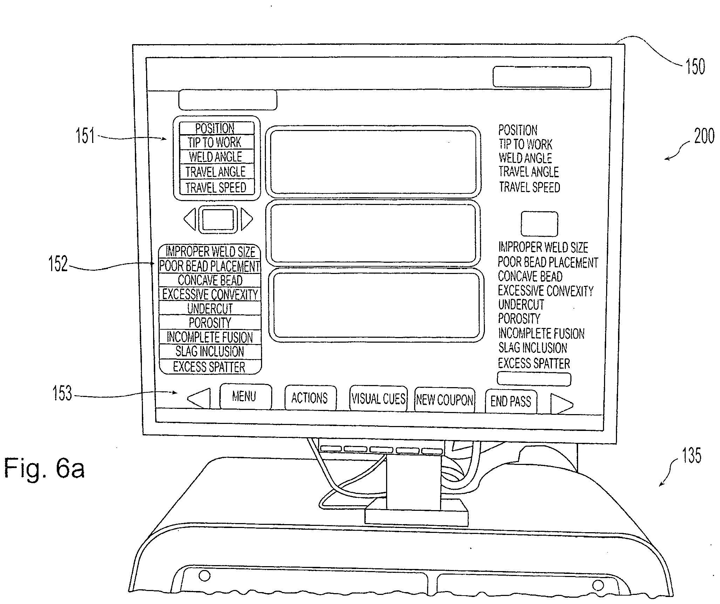

Figure 6 illustrates an example of the console **135** and welding user interface **130.** The welding unit interface **130** may include a set of buttons **131** corresponding to the user selections **153** used during set up and operation of the simulator **10.** The buttons **131** may be colored to correspond to colors of the user selections **153** displayed on displaying device **200.** When one of the buttons **131** is pressed, a signal is sent to the logic processor-based subsystem **110** to activate the corresponding function. The welding unit interface **130** may also include a joystick **132** capable of being used by a user to select various parameters and selections displayed on the displaying device **200.** The welding unit interface **130** further includes a dial or knob **133,** which in an exemplary manner, may be used for adjusting wire feed speed/amps, and another dial or knob **134** for adjusting volts/trim. The welding unit interface **130** also includes a dial or knob **136** for selecting an arc welding process. In accordance with an example, three arc welding processes are selectable including flux cored arc welding (FCAW), gas metal arc welding (GMAW), and shielded metal arc welding (SMAW). The welding unit interface **130** further includes a dial or knob **137** for selecting a welding polarity. In accordance with an embodiment of the present invention, three arc welding polarities are selectable including alternating current (AC), positive direct current (DC+), and negative direct current (DC-). Still, other welding processes and set up features may be incorporated in the simulator 10,
including but not limited to TIG welding. From the aforementioned, it will be readily seen that set up of the simulator **10** parallels set up of a real-world device.

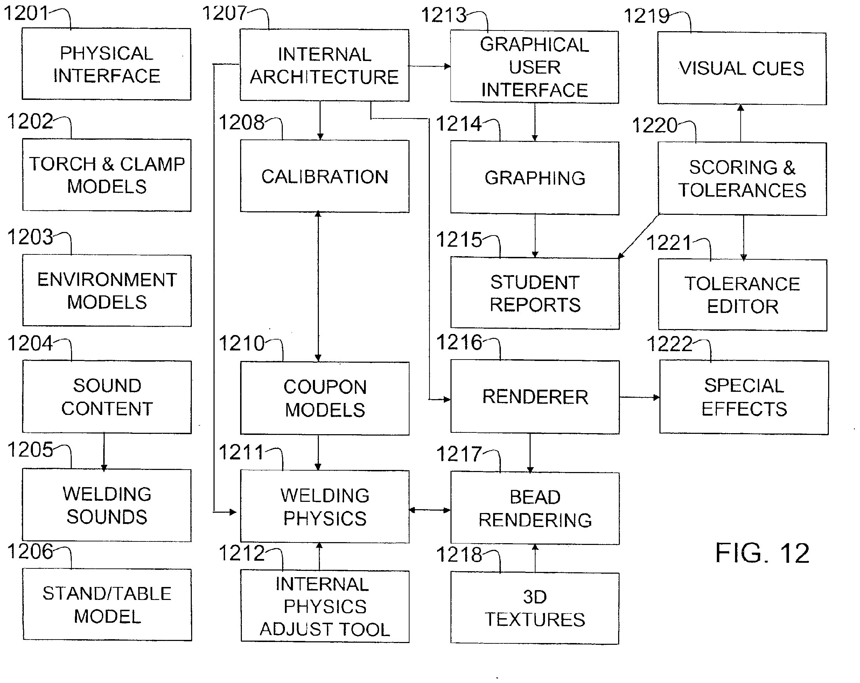

The graphical user interface functionality **1213** (see Figure 12) allows a user, viewable via the observer display device **150** and using the joystick **132** of the physical user interface **130,** to set up a welding scenario. The set up of a welding scenario may include selecting a language, entering an end user name, selecting a practice plate (e.g. a welding coupon, T-plate, flat plate), selecting a welding process (e.g., FCAW, GMAW, SMAW, TIG) and associated axial spray, pulse, or short arc mode of transfer, selecting a gas type and flow rate, selecting a type of stick electrode (e.g., E6010 or E7018), and selecting a type of flux cored wire (e.g., self-shielded, gas-shielded). The set up of a welding scenario may also include setting up a coupon stand **170** to be discussed in detail below. The set up of a welding scenario further includes selecting an environment (e.g., a background environment in virtual reality space), setting a wire feed speed, setting a voltage level, selecting a polarity, and turning particular visual cues on or off. It is noted here that in one example, limitations may be incorporated into the simulator **10,** which may be software limitations, that prevent operation of a given welding scenario until the appropriate settings for a selected process have been properly entered. In this way, trainee users **12a** are taught or learn the proper range of real-world welding settings by setting up virtual welding scenarios.

Accordingly, displaying device **200** reflects activity corresponding to the end user selections **153** including menu, actions, visual cues, new coupon set up, and scoring. These user selections may be tied to user buttons on the console **135.** As a user makes various selections via displaying device **200,** the displayed characteristics can change to provide selected information and other options to the user. However, the displaying device **200,** which may be an observer display device **150,** may have another function, which is to display virtual images seen by the end user **12** during operation of the simulator **10,** i.e. while engaging in virtual welding activity. Displaying device **200** may be set up to view the same image as seen by the end user **12.** Alternatively, displaying device **200** may also be used to display a different view, or different perspective of the virtual welding activity.

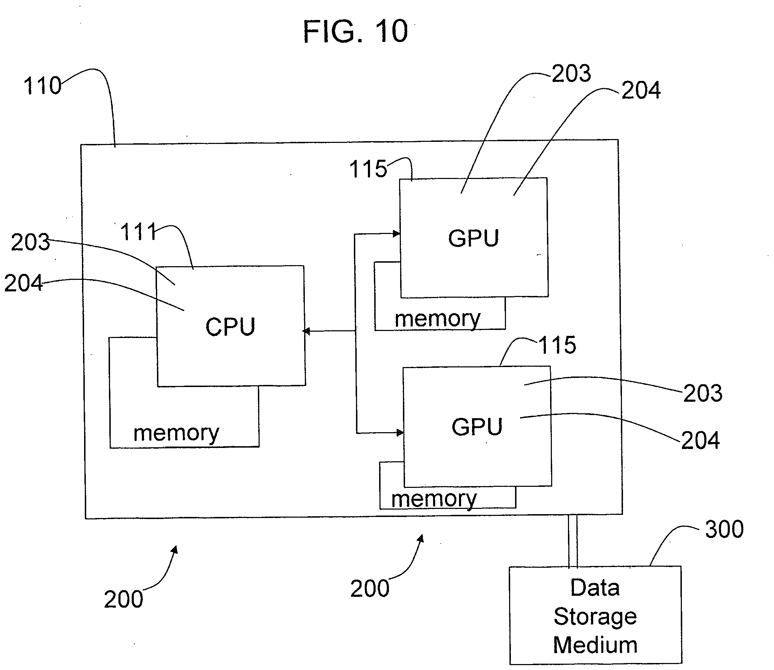

In one example, displaying device **150, 200** may be used to play back virtual welding activity stored electronically on data storage devices **300,** shown in Figure 10. Data representing the end user's **12** virtual welding activity may be stored for: playback and review, downloaded for archiving purposes and/or transmitted to remote locations for viewing and critiquing in real-time. In replaying the virtual welding activity, details such as weld puddle fluidity, travel speed, as well as discontinuity states **152** including, for example, improper fillet size, poor bead placement, concave bead, excessive convexity, undercut, porosity, incomplete fusion, slag entrapment, excess spatter, and burn-through, may be represented. Undercut may also be displayed, which is the result of an out of tolerance angle. Moreover, porosity may be displayed caused by moving the arc too far away from the weldment. In this manner, the simulator **10** is capable of replaying part or all of particular virtual welding activity, modeling all aspects of the virtual welding scenario including occlusions and defects related directly to the end user's activity.

Referencing Figure 6a, simulator **10** is also capable of analyzing and displaying the results of virtual welding activity. By analyzing the results, it is meant that simulator **10** is capable of determining when during the welding pass and where along the weld joints, the end user **12** deviated from the acceptable limits of the welding process. A score may be attributed to the end user's **12** performance. In one example, the score may be a function of deviation in position, orientation and speed of the mock welding tool **160** through ranges of tolerances, which may extend from an ideal welding pass to marginal or unacceptable welding activity. Any gradient of ranges may be incorporated into the simulator **10** as chosen for scoring the end user's **12** performance. Scoring may be displayed numerically or alphanumerically. Additionally, the end user's **12** performance may be displayed graphically showing, in time and/or position along the weld joint, how closely the mock welding tool traversed the weld joint. Parameters such as travel angle, work angle, speed, and distance from the weld joint are examples of what may be measured, although any parameters may be analyzed for scoring purposes. The tolerance ranges of the parameters are taken from real-world welding data, thereby providing accurate feedback as to how the end user will perform in the real world. In another example, analysis of the defects corresponding to the end user's **12** performance may also be incorporated and displayed on the displaying device **150, 200**. In this example, a graph may be depicted indicating what type of discontinuity resulted from measuring the various parameters monitored during the virtual welding activity. While occlusions may not be visible on the displaying device **200,** defects may still have occurred as a result of the end user's **12** performance, the results of which may still be correspondingly displayed, i.e. graphed.

Displaying device **200** may also be used to display tutorial information used to train an end user **12.** Examples of tutorial information may include instructions, which may be displayed graphically as depicted by video or pictures. Additionally, instructions may be written or presented in audio format, mentioned above. Such information may be stored and maintained on the data storage devices **300.** In one example, simulator **10** is capable of displaying virtual welding scenes showing various welding parameters **151** including position, tip to work, weld angle, travel angle, and travel speed, termed herein as visual cues.

In one example, remote communications may be used to provide virtual instruction by off-site personnel, i.e. remote users, working from similarly or dissimilarly constructed devices, i.e. simulators. Portraying a virtual welding process may be accomplished via a network connection including but not limited to the internet, LANs, and other means of data transmission. Data representing a particular weld (including performance variables) may be sent to another system capable of displaying the virtual image and/or weld data. It should be noted that the transmitted data is sufficiently detailed for allowing remote user(s) to analyze the welder's performance. Data sent to a remote system may be used to generate a virtual welding environment thereby recreating a particular welding process. Still, any way of communicating performance data or virtual welding activity to another device may be implemented.

### WELDING COUPON

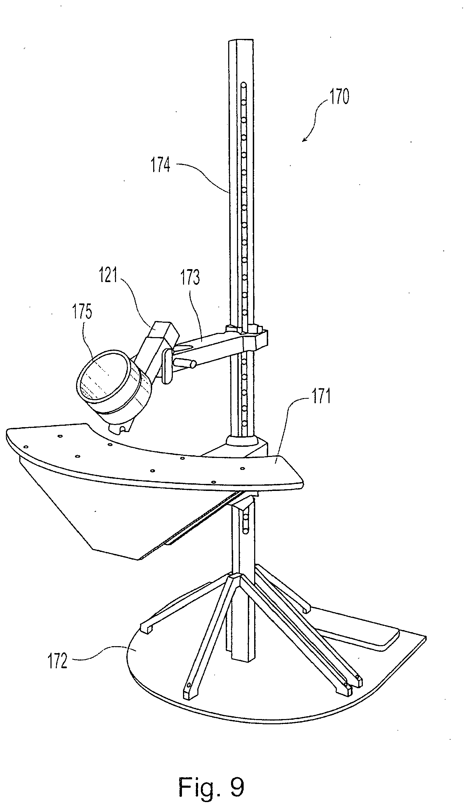

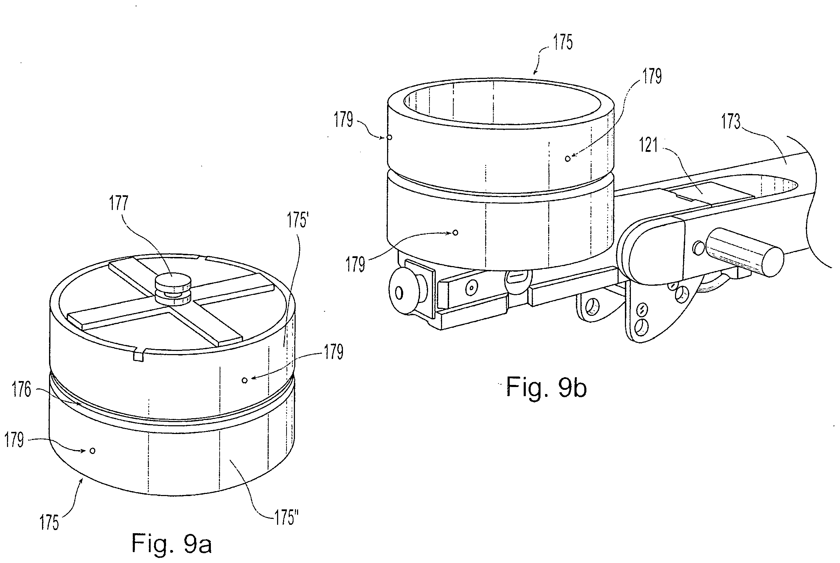

With reference now to Figures 1, 9a and 9b, simulator **10** may include a welding coupon **175** that resembles pipe sections juxtaposed to form a welding joint **176.** The welding coupon **175** may work in conjunction with the simulator **10** serving as a guide for the end user **12** while engaging in virtual welding activity. A plurality of welding coupons **175** may be used, that is to say interchanged for use in a given cycle of virtual welding activity. The types of welding coupons may include cylindrical pipe sections, arcuate pipe segments, flat plate and T-plate weld joints, just to name a few. In one example, each of the welding coupons may incorporate open root joints or grooves. However, any configurations of weld joints may be incorporated into a welding coupon.

The dimensions of welding coupons **175** may vary. For cylindrical pipe, the range of inside diameters may extend from 38.1 mm (1.5 inches) (inside diameter) to 457.2 mm (18 inches) (inside diameter). In one particular embodiment, the range of inside diameters may exceed 18 inches. In another embodiment, arcuate pipe segments may have a characteristic radius in the range extending from 38.1 mm (1.5 inches) (inside diameter) up to and exceeding 457.2 mm (18 inches) (inside diameter). Furthermore, it is to be construed that any inside diameter of welding coupon **175** may be utilized, both those smaller than 38.1 mm (1.5 inches) and those exceeding 457.2 mm (18 inches). In a practical sense, any size of welding coupon **175** can be used as long as the welding coupon **175,** or a portion of the welding coupon **175,** fits within the envelope generated by the spatial tracker **120.** Flat plate may extend up to and exceed 18 inches in length as well. Still, it is to be understood that the upper dimensional limits of a welding coupon **175** are constrained only by the size and strength of the sensing field generated by the spatial tracker **120** and its ability to be positioned respective of the welding coupon **175**.

As mentioned above, the welding coupon **175** may be constructed from a material that does not interfere with the spatial tracker **120.** For spatial trackers generating a magnetic field, the welding coupon **175** may be constructed from non-ferrous and non-conductive material. However, any type of material may be chosen that is suitable for use with the type of spatial tracker **120** or other sensors selected.

Referencing Figures 9a and 9b, the welding coupon **175** may be constructed so that it fits into a table or stand **170,** which functions (at least in part) to hold the welding coupon **175** constant with respect to the spatial tracker **120.** Accordingly, the welding coupon **175** may include a connecting portion **177** or connector **177.** The connecting portion **177** may extend from one side of the welding coupon **175,** which as illustrated may be the bottom side, and may be received into a mechanical interlocking device included with the stand **170.** It will be appreciated that the orientation at which the welding coupon **175** is inserted into the stand **170** may need to be constant, i.e. repeatable, for closely matching the virtual weldment, i.e. pipe, created within the virtual welding environment **15.** In this manner, as long as the simulator **10** is aware of how the position of the welding coupon **175** has changed, adjustments to the virtual counterpart may be made accordingly. For example, during set up, the end user **12** may select the size of pipe to be welded on. The end user **12** may then insert the appropriate welding coupon **175** into the stand **170,** locking it into position. Subsequently, the end user **12** may choose a desired welding position making the selection via the welding user interface **130.** As will be described below, the stand **170** may then be tilted or adjusted to position the welding coupon **175** in any of the welding positions recognized by the simulator **10.** Of course, it will be appreciated that adjusting the position of the welding coupon **175** also adjusts the position of the spatial tracker **120** thereby preserving the relative position of the welding coupon **175** within the sensory tracking field.

Figure 9 depicts one example of the stand **170.** The stand **170** may include an adjustable table **171,** a stand base **172,** an adjustable arm **173,** and a vertical post **174.** The table **171** and the arm **173** are respectively attached to the vertical post **174.** The table **171** and the arm **173** are each capable of being adjusted along the height of the vertical post **174,** which may include upward, downward, and/or rotational movement with respect to the vertical post **174.** The arm **173** is used to hold the welding coupon **175,** in a manner consistent with that discussed herein. The table **171** may assist the end user **12** by allowing his/her arms to rest on the table **171** during use. In one particular embodiment, the vertical post **174** is indexed with position information such that a user may know exactly where the arm **173** and the table **171** are positioned. This information may also be entered into the simulator **10** by way of the welding user interface **130** and the displaying device **150** during set up.

An alternative example is contemplated wherein the positions of the table **171** and the arm **173** are automatically adjusted responsive to selections made during set up of the simulator **10.** In this embodiment, selections made via the welding user interface **130** may be communicated to the logic processor-based subsystem **110.** Actuators and feedback sensors employed by the stand **170** may be controlled by the logic processor-based subsystem **110** for positioning the welding coupon **175** without physically moving the arm **173** or the table **171.** In one example, the actuators and feedback sensors may comprise electrically driven servomotors. However, any locomotive device may be used to automatically adjust the position of the stand **170** as chosen with sound engineering judgment. In this manner, the process of setting up the welding coupon **175** is automated and does not require manual adjustment by the end user **12.**

Another example includes the use of intelligence devices used in conjunction with the welding coupon **175,** termed herein as "smart" coupons **175.** In this example, the welding coupon **175** includes a device having information about that particular welding coupon **175** that may be sensed by the stand **170.** In particular, the arm **173** may include detectors that read data stored on or within the device located on the welding coupon **175.** Examples may include the use of digital data encoded on a sensor, e.g. micro-electronic device, that may be read wirelessly when brought into proximity of the detectors. Other examples may include the use of passive devices like bar coding. Still any manner of intelligently communicating information about the welding coupon **175** to the logic processor-based subsystem **110** may be chosen with sound engineering judgment.

The data stored on the welding coupon **175** may automatically indicate, to the simulator **10,** the kind of welding coupon **175** that has been inserted in the stand **170.** For example, a 2-inch pipe coupon may include information related to its diameter. Alternatively, a flat plate coupon may include information that indicates the kind of weld joint included on the coupon, e.g. groove weld joint or a butt weld joint, as well as its physical dimensions. In this manner, information about the welding coupon **175** may be used to automate that portion of the setup of the simulator **10** related to selecting and installing a welding coupon **175.**

Calibration functionality **1208** (see Figure 12) provides the capability to match up physical components in real world space (3D frame of reference) with visual components in the virtual welding environment **15.** Each different type of welding coupon **175** is calibrated in the factory by mounting the welding coupon **175** to the arm **173** of the stand **170** and touching the welding coupon **175** at predefined points **179** (indicated by, for example, three dimples **179** on the welding coupon **175**) with a calibration stylus operatively connected to the stand **170.** The simulator **10** reads the magnetic field intensities at the predefined points **179,** provides position information to the logic processor-based subsystem **110,** and the logic processor-based subsystem **110** uses the position information to perform the calibration (i.e., the translation from real world space to virtual reality space).

Any part of the same type of welding coupon **175,** accordingly, fits into the arm **173** of the stand **170** in the same repeatable way to within very tight tolerances. Therefore, once a particular type welding coupon **175** is calibrated, repeated calibration of similar coupons is not necessary, i.e. calibration of a particular type of welding coupon **175** is a one-time event. Stated differently, welding coupons **175** of the same type are interchangeable. Calibration ensures that physical feedback perceived by the user during a welding process matches up with what is displayed to the user in virtual reality space, making the simulation seem more real. For example, if the user slides the tip of a mock welding tool **160** around the corner of an actual welding coupon **175,** the user will see the tip sliding around the corner of the virtual welding coupon on the displaying device **200** as the user feels the tip sliding around the actual corner. In accordance with an example, the mock welding tool **160** may also be placed in a pre-positioned jig and calibrated in a similar manner, based on the known jig position.

In accordance with another example, "smart" coupons may include sensors that allow the simulator **10** to track the pre-defined calibration point, or corners of the "smart" coupon. The sensors may be mounted on the welding coupon **175** at the precise location of the predefined calibration points. However, any manner of communicating calibration data to the simulator **10** may be chosen. Accordingly, the simulator **10** continuously knows where the "smart" coupon is in real world 3D space. Furthermore, licensing keys may be provided to "unlock" welding coupons **175.** When a particular welding coupon **175** is purchased, a licensing key may be provided that allows the end user **12a, 12b** to enter the licensing key into the simulator 10, unlocking the software associated with that particular welding coupon **175.** In an alternative example, special non-standard welding coupons may be provided based on real-world CAD drawings of parts.

### PROCESSOR-BASED SYSTEM

With reference now to Figures 2, 4 and 10, as mentioned above, simulator **10** includes a logic processor-based subsystem **110,** which may comprise programmable electronic circuitry **200** for executing coded instructions used to generate the virtual welding environment **15.** The programmable electronic circuitry **200** may include one or more logic processors **203** or logic processor-based systems **203,** which may be comprised of one or more microprocessors **204.** In one particular example, the programmable electronic circuitry **200** may be comprised of central processing unit(s) (CPU) and graphics processing unit(s) (GPU), to be discussed further below. Additional circuitry may be included, like for example electronic memory, i.e. RAM, ROM, as well as other peripheral support circuitry. It is noted that electronic memory may be included for both the CPU and the GPU, each of which may be separately programmable for use in rendering aspects of the virtual welding environment **15** as described herein. Moreover, the programmable electronic circuitry **200** may include and utilize data storage devices **300** such as hard disk drives, optical storage devices, flash memory and the like. Still other types of electronic circuitry may be included that facilitate the transfer of data between devices within the simulator **10** or between different simulators **10.** This may include, for example, receiving data from one or more input devices **155,** e.g. spatial tracker or sensor, or transferring data over one or more networks which may be a local area networks (LAN), a wide area network (WAN) and/or Internet. It is to be understood that the aforementioned devices and processes are exemplary in nature and should not be construed as limiting. In fact, any form of programmable circuitry, support circuitry, communication circuitry and/or data storage may be incorporated as chosen with sound engineering judgment.

Figure 10 illustrates an example of a subsystem block diagram of the logic processor-based subsystem **110** of the simulator **10.** The logic processor-based subsystem **110** may include a central processing unit (CPU) **111** and two graphics processing units (GPU) **115.** The two GPUs **115** may be programmed to provide virtual reality simulation of a weld puddle having real-time molten metal fluidity and heat absorption and dissipation characteristics.

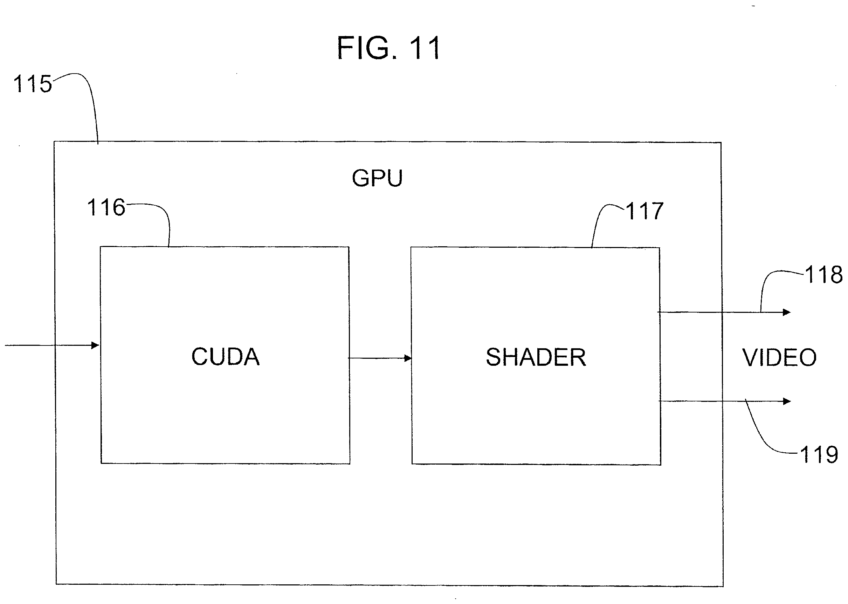

With reference to Figure 11, a block diagram of the graphics processing unit (GPU) **115** is shown. Each GPU **115** supports the implementation of data parallel algorithms. In accordance with an example, each GPU **115** provides two video outputs **118** and **119** capable of providing two virtual reality views. Two of the video outputs may be routed to the face-mounted display device **140,** rendering the welder's point of view, and a third video output may be routed to the observer display device **150,** for example, rendering either the welder's point of view or some other point of view. The remaining fourth video output may be routed to a projector, for example, or used for any other purpose suitable for simulating a virtual welding environment **15.** Both GPUs **115** may perform the same welding physics computations but may render the virtual welding environment **15** from the same or different points of view. The GPU **115** includes a computed unified device architecture (CUDA) **116** and a shader **117.** The CUDA **116** is the computing engine of the GPU **115** which is accessible to software developers through industry standard programming languages. The CUDA **116** includes parallel cores and is used to run the physics model of the weld puddle simulation described herein. The CPU **111** provides real-time welding input data to the CUDA **116** on the GPU **115.** In one particular example, the shader **117** is responsible for drawing and applying all of the visuals of the simulation. Bead and puddle visuals are driven by the state of a wexel displacement map which is described later herein. In accordance with an example, the physics model runs and updates at a rate of about 30 times per second.

Figure 12 illustrates an example of a functional block diagram of the simulator **10.** The various functional blocks of the simulator **10** may be implemented largely via software instructions and modules running on the logic processor-based subsystem **110.** The various functional blocks of the simulator **10** include a physical interface **1201,** torch and clamp models **1202,** environment models **1203,** sound content functionality **1204,** welding sounds **1205,** stand/table model **1206,** internal architecture functionality **1207,** calibration functionality **1208,** coupon models **1210,** welding physics **1211,** internal physics adjustment tool (tweaker) **1212,** graphical user interface functionality **1213,** graphing functionality **1214,** student reports functionality **1215,** renderer **1216**, bead rendering **1217,** 3D textures **1218,** visual cues functionality **1219,** scoring and tolerance functionality **1220,** tolerance editor **1221,** and special effects **1222.**

The internal architecture functionality **1207** provides the higher level software logistics of the processes of the simulator **10** including, for example, loading files, holding information, managing threads, turning the physics model on, and triggering menus. The internal architecture functionality **1207** runs on the CPU **111**. Certain real-time inputs to the logic processor-based subsystem **110** include arc location, gun position, face-mounted display device or helmet position, gun on/off state, and contact made state (yes/no).

During a simulated welding scenario, the graphing functionality **1214** gathers user performance parameters and provides the user performance parameters to the graphical user interface functionality **1213** for display in a graphical format (e.g., on the observer display device **150**). Tracking information from the spatial tracker **120** feeds into the graphing functionality **1214.** The graphing functionality **1214** includes a simple analysis module (SAM) and a whip/weave analysis module (WWAM). The SAM analyzes user welding parameters including welding travel angle, travel speed, weld angle, position, and tip to work by comparing the welding parameters to data stored in bead tables. The WWAM analyzes user whipping parameters including dime spacing, whip time, and puddle time. The WWAM also analyzes user weaving parameters including width of weave, weave spacing, and weave timing. The SAM and WWAM interpret raw input data (e.g., position and orientation data) into functionally usable data for graphing. For each parameter analyzed by the SAM and the WWAM, a tolerance window is defined by parameter limits around an optimum or ideal set point input into bead tables using the tolerance editor **1221,** and scoring and tolerance functionality **1220** is performed.

The tolerance editor **1221** includes a weldometer which approximates material usage, electrical usage, and welding time. Furthermore, when certain parameters are out of tolerance, welding discontinuities (i.e., welding defects) may occur. The state of any welding discontinuities are processed by the graphing functionality **1214** and presented via the graphical user interface functionality **1213** in a graphical format. Such welding discontinuities include fillet size, poor bead placement, concave bead, excessive convexity, undercut, porosity, incomplete fusion, slag entrapment, and excess spatter. In accordance with an example, the level or amount of a discontinuity is dependent on how far away a particular user parameter is from the optimum or ideal set point.

Different parameter limits may be pre-defined for different types of users such as, for example, welding novices, welding experts, and persons at a trade show. The scoring and tolerance functionality 1220 provide number scores depending on how close to optimum (ideal) a user is for a particular parameter and depending on the level of discontinuities or defects present in the weld. Information from the scoring and tolerance functionality **1220** and from the graphics functionality **1214** may be used by the student reports functionality **1215** to create a performance report for an instructor and/or a student.

Visual cues functionality **1219** provide immediate feedback to the user by displaying overlaid colors and indicators on the face mounted display device **140** and/or the observer display device **150.** Visual cues are provided for each of the welding parameters **151** including position, tip to work, weld angle, travel angle, and travel speed and visually indicate to the user if some aspect of the user's welding technique should be adjusted based on the predefined limits or tolerances. Visual cues may also be provided for whip/weave technique and weld bead "dime" spacing, for example.

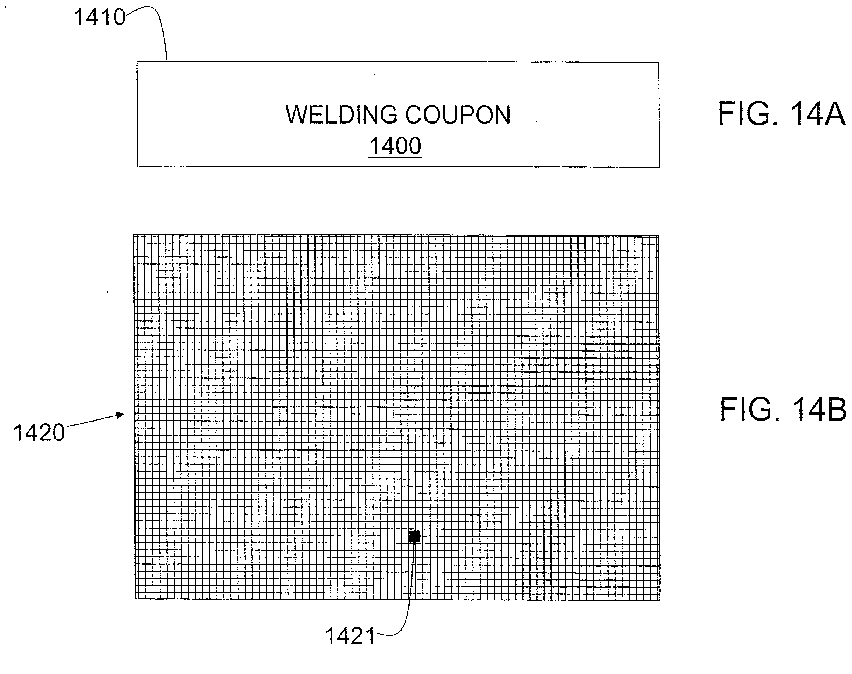

In accordance with an example, simulation of a weld puddle or pool in virtual reality space is accomplished where the simulated weld puddle has real-time molten metal fluidity and heat dissipation characteristics. At the heart of the weld puddle simulation is the welding physics functionality **1211** (a.k.a., the physics model) which may be executed on the GPUs **115**. The welding physics functionality employs a double displacement layer technique to accurately model dynamic fluidity/viscosity, solidity, heat gradient (heat absorption and dissipation), puddle wake, and bead shape, and is described in more detail herein with respect to Figure. 14a-14c.

The welding physics functionality **1211** communicates with the bead rendering functionality 1217 to render a weld bead in all states from the heated molten state to the cooled solidified state. The bead rendering functionality **1217** uses information from the welding physics functionality **1211** (e.g., heat, fluidity, displacement, dime spacing) to accurately and realistically render a weld bead in virtual reality space in real-time. The 3D textures functionality **1218** provides texture maps to the bead rendering functionality **1217** to overlay additional textures (e.g., scorching, slag, grain) onto the simulated weld bead. The renderer functionality **1216** is used to render various non-puddle specific characteristics using information from the special effects module **1222** including sparks, spatter, smoke, arc glow, fumes, and certain discontinuities such as, for example, undercut and porosity.

The internal physics adjustment tool **1212** is a tweaking tool that allows various welding physics parameters to be defined, updated, and modified for the various welding processes. In accordance with an example, the internal physics adjustment tool **1212** runs on the CPU **111,** and the adjusted or updated parameters are downloaded to the GPUs **115.** The types of parameters that may be adjusted via the internal physics adjustment tool **1212** include parameters related to welding coupons, process parameters that allow a process to be changed without having to reset a welding coupon (allows for doing a second pass), various global parameters that can be changed without resetting the entire simulation, and other various parameters.

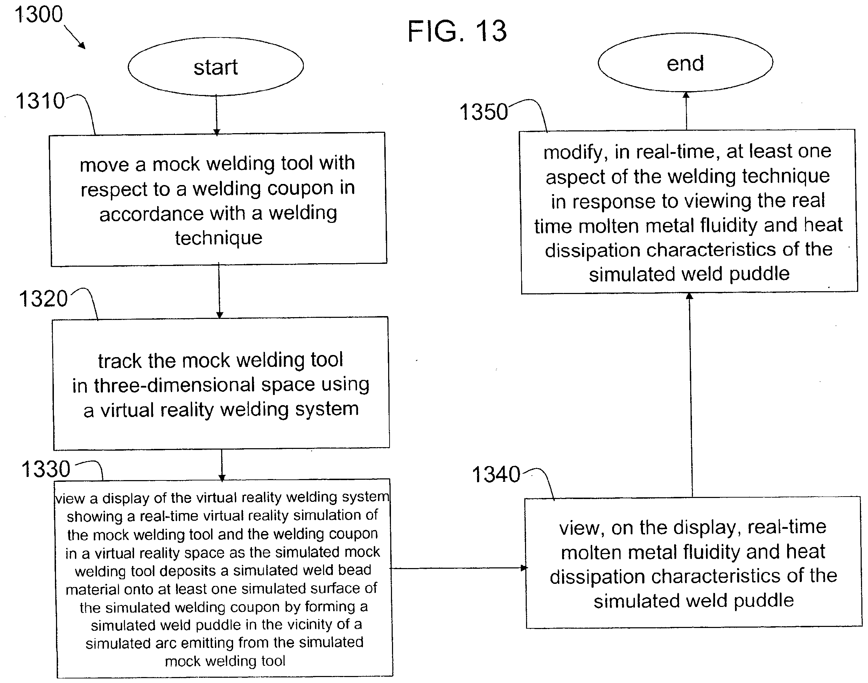

Figure 13 is a flow chart of a method **1300** of training using the virtual reality training simulator **10.** In step **1310,** move a mock welding tool with respect to a welding coupon in accordance with a welding technique. In step **1320,** track position and orientation of the mock welding tool in three-dimensional space using a virtual reality system. In step **1330,** view a display of the virtual reality welding system showing a real-time virtual reality simulation of the mock welding tool and the welding coupon in a virtual reality space as the simulated mock welding tool deposits a simulated weld bead material onto at least one simulated surface of the simulated welding coupon by forming a simulated weld puddle in the vicinity of a simulated arc emitting from said simulated mock welding tool. In step **1340,** view on the display, real-time molten metal fluidity and heat dissipation characteristics of the simulated weld puddle. In step **1350,** modify in real-time, at least one aspect of the welding technique in response to viewing the real-time molten metal fluidity and heat dissipation characteristics of the simulated weld puddle.

The method **1300** illustrates how a user is able to view a weld puddle in virtual reality space and modify his welding technique in response to viewing various characteristics of the simulated weld puddle, including real-time molten metal fluidity (e.g., viscosity) and heat dissipation. The user may also view and respond to other characteristics including real-time puddle wake and dime spacing. Viewing and responding to characteristics of the weld puddle is how many welding operations are actually performed in the real world. The double displacement layer modeling of the welding physics functionality **1211** run on the GPUs **115** allows for such real-time molten metal fluidity and heat dissipation characteristics to be accurately modeled and represented to the user. For example, heat dissipation determines solidification time (i.e., how much time it takes for a wexel to completely solidify).

Furthermore, a user may make a second pass over the weld bead material using the same or a different (e.g., a second) mock welding tool, welding electrode and/or welding process. In such a second pass scenario, the simulation shows the simulated mock welding tool, the welding coupon, and the original simulated weld bead material in virtual reality space as the simulated mock welding tool deposits a second simulated weld bead material merging with the first simulated weld bead material by forming a second simulated weld puddle in the vicinity of a simulated arc emitting from the simulated mock welding tool. Additional subsequent passes using the same or different welding tools or processes may be made in a similar manner. In any second or subsequent pass, the previous weld bead material is merged with the new weld bead material being deposited as a new weld puddle is formed in virtual reality space from the combination of any of the previous weld bead material, the new weld bead material, and possibly the underlying coupon material. Such subsequent passes may be performed to repair a weld bead formed by a previous pass, for example, or may include a heat pass and one or more gap closing passes after a root pass as is done in pipe welding. Base and weld bead material may be simulated to include mild steel, stainless steel, and aluminum.

Welding with stainless steel materials is simulated in a real-time virtual environment. The base metal appearance is simulated to provide a realistic representation of a stainless steel weldment. Simulation of the visual effect is provided to change the visual spectrum of light to accommodate the coloration of the arc. Realistic sound is also simulated based on proper work distance, ignition, and speed. The arc puddle appearance and deposition appearance are simulated based on the heat affected zone and the torch movement. Simulation of dross or broken particles of aluminum oxide or aluminum nitride films, which can be scattered throughout the weld bead, is provided. Calculations related to the heating and cooling affected zones are tailored for stainless steel welding. Discontinuity operations related to spatter are provided to more closely and accurately simulate the appearance of stainless steel GMAW welding.

Welding with aluminum materials is simulated in a real-time virtual environment. The bead wake is simulated to closely match the appearance of the aluminum welding to that seen in the real world. The base metal appearance is simulated to represent a realistic representation of an aluminum weldment. Simulation of the visual effect is provided to change the visual spectrum of light to accommodate the coloration of the arc. A calculation of lighting is provided to create reflectivity. Calculations related to the heating and cooling affected zones are tailored for aluminum welding. Simulation of oxidation is provided to create a realistic "cleaning action". Realistic sound is also simulated based on proper work distance, ignition, and speed. The arc puddle appearance and deposition appearance are simulated based on the heat affected zone and the torch movement. The appearance of the aluminum wire is simulated in the GMAW torch to provide a realistic and proper appearance.

GTAW welding is simulated in a real-time virtual environment. Simulation of operational parameters for GTAW welding are provided including, but not limited to, flow rate, pulsing frequency, pulse width, arc voltage control, AC balance, and output frequency control. Visual representation of the puddle "splash" or dipping technique and melt off of the welding consumable are also simulated. Furthermore, representations of autogenous (no filler metal) and GTAW with filler metal welding operations in the welding puddle are rendered visually and audibly. Implementation of additional filler metal variations may be simulated including, but not limited to, carbon steel, stainless steel, aluminum, and Chrome Moly. A selectable implementation of an external foot pedal may be provided for operation while welding.

### ENGINE FOR MODELING

Figures 14a-14b illustrate the concept of a welding element (wexel) displacement map **1420**. Figure 14a shows a side view of a flat welding coupon **1400** having a flat top surface **1410.** The welding coupon **1400** exists in the real world as, for example, a plastic part, and also exists in virtual reality space as a simulated welding coupon. Figure 14b shows a representation of the top surface **1410** of the simulated welding coupon **1400** broken up into a grid or array of welding elements, termed "wexels" forming a wexel map **1420.** Each wexel (e.g., wexel **1421)** defines a small portion of the surface **1410** of the welding coupon. The wexel map defines the surface resolution. Changeable channel parameter values are assigned to each wexel, allowing values of each wexel to dynamically change in real-time in virtual reality weld space during a simulated welding process. The changeable channel parameter values correspond to the channels Puddle (molten metal fluidity/viscosity displacement), Heat (heat absorption/dissipation), Displacement (solid displacement), and Extra (various extra states, e.g., slag, grain, scorching, virgin metal). These changeable channels are referred to herein as PHED for Puddle, Heat, Extra, and Displacement, respectively.

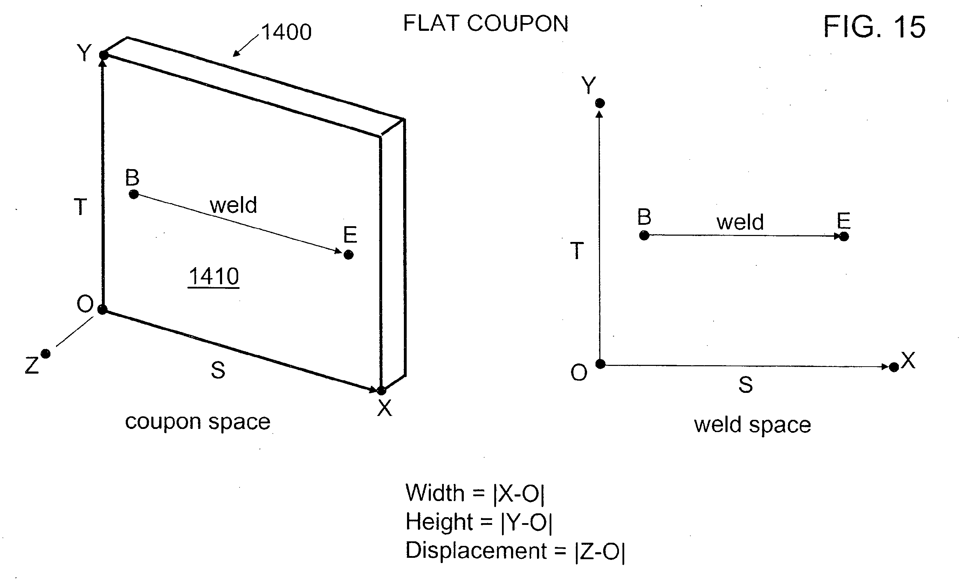

Figure 15 illustrates an example of a coupon space and a weld space of the flat welding coupon **1400** of Figure 14 simulated in the simulator **10** of Figures 1 and 2. Points O, X, Y, and Z define the local 3D coupon space. In general, each coupon type defines the mapping from 3D coupon space to 2D virtual reality weld space. The wexel map **1420** of Figure 14 is a two-dimensional array of values that map to weld space in virtual reality. A user is to weld from point B to point E as shown in Figure 15. A trajectory line from point B to point E is shown in both 3D coupon space and 2D weld space in Figure 15.

Each type of coupon defines the direction of displacement for each location in the wexel map. For the flat welding coupon of Figure 15, the direction of displacement is the same at all locations in the wexel map (i.e., in the Z-direction). The texture coordinates of the wexel map are shown as S, T (sometimes called U, V) in both 3D coupon space and 2D weld space, in order to clarify the mapping. The wexel map is mapped to and represents the rectangular surface **1410** of the welding coupon **1400.**

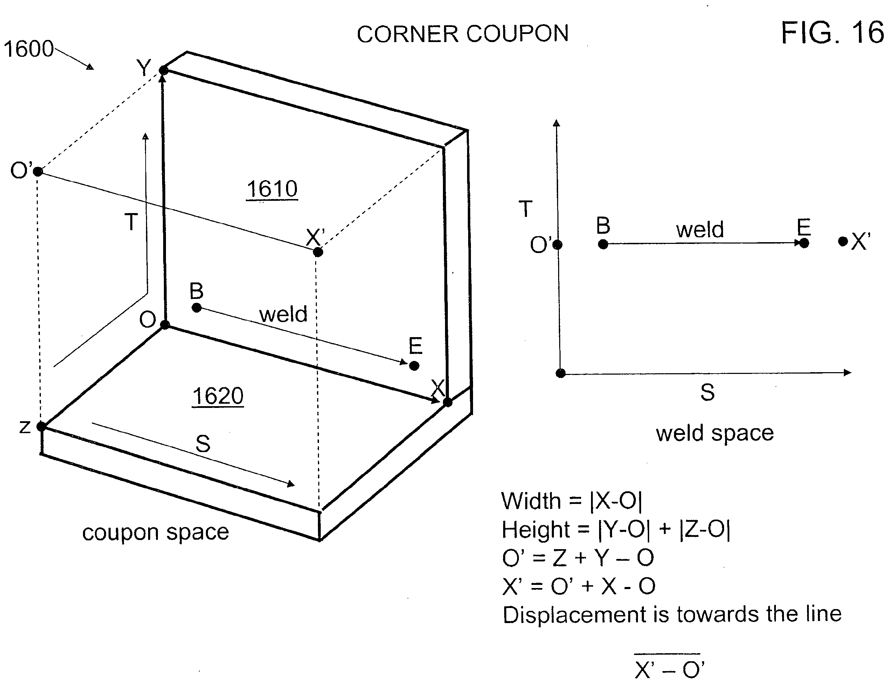

Figure 16 illustrates an example of a coupon space and a weld space of a corner welding coupon **1600** simulated in the simulator **10.** The corner welding coupon **1600** has two surfaces **1610** and **1620** in 3D coupon space that are mapped to 2D weld space as shown in Figure 16. Again, points O, X, Y, and Z define the local 3D coupon space. The texture coordinates of the wexel map are shown as S, T in both 3D coupon space and 2D weld space, in order to clarify the mapping. A user is to weld from point B to point E as shown in Figure 16. A trajectory line from point B to point E is shown in both 3D coupon space and 2D weld space in Figure 16. However, the direction of displacement is towards the line X'-O' as shown in the 3D coupon space, towards the opposite corner.

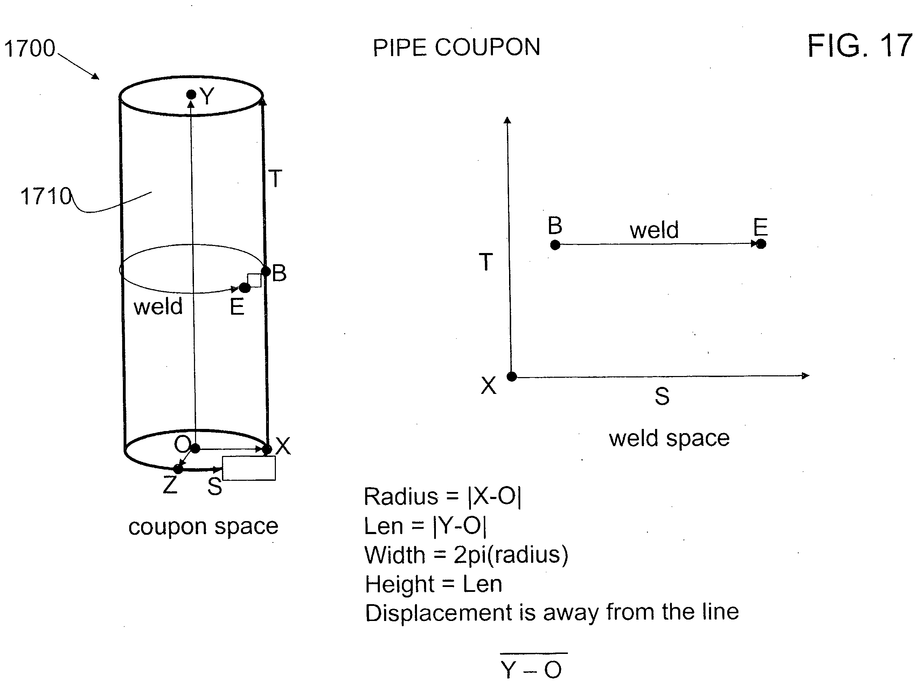

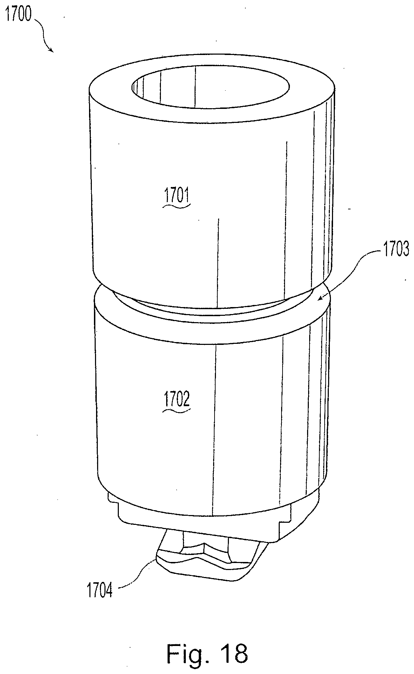

Figure 17 illustrates an example of a coupon space and a weld space of a pipe welding coupon **1700** simulated in the simulator **10.** The pipe welding coupon **1700** has a curved surface **1710** in 3D coupon space that is mapped to 2D weld space. Points O, X, Y, and Z once again define the local 3D coupon space. The texture coordinates of the wexel map are shown as S, T in both 3D coupon space and 2D weld space, in order to clarify the mapping. An end user **12** is to weld from point B to point E along a curved trajectory as shown in Figure 17. A trajectory curve and line from point B to point E is shown in 3D coupon space and 2D weld space, respectively. The direction of displacement is away from the line Y-O (i.e., away from the center of the pipe). Figure 18 illustrates an example of the pipe welding coupon **1700** of Figure 17. The pipe welding coupon **1700** is made of a non-ferric, non-conductive plastic and simulates two pipe pieces **1701** and **1702** coming together to form a root joint **1703.** An attachment piece **1704** for attaching to the arm **173** of the stand **170** is also shown.

In a similar manner that a texture map may be mapped to a rectangular surface area of a geometry, a weldable wexel map may be mapped to a rectangular surface of a welding coupon. Each element of the weldable map is termed a wexel in the same sense that each element of a picture is termed a pixel (a contraction of picture element). A pixel contains channels of information that define a color (e.g., red, green, blue, etc.). A wexel contains channels of information (e.g., P, H, E, D) that define a weldable surface in virtual reality space.

In accordance with the present invention, the format of a wexel is summarized as channels PHED (Puddle, Heat, Extra, Displacement) which contains four floating point numbers. The Extra channel is treated as a set of bits which store logical information about the wexel such as, for example, whether or not there is any slag at the wexel location. The Puddle channel stores a displacement value for any liquefied metal at the wexel location. The Displacement channel stores a displacement value for the solidified metal at the wexel location. The Heat channel stores a value giving the magnitude of heat at the wexel location. In this way, the weldable part of the coupon can show displacement due to a welded bead, a shimmering surface "puddle" due to liquid metal, color due to heat, etc. All of these effects are achieved by the vertex and pixel shaders applied to the weldable surface.

A displacement map and a particle system are used where the particles can interact with each other and collide with the displacement map. The particles are virtual dynamic fluid particles and provide the liquid behavior of the weld puddle but are not rendered directly (i.e., are not visually seen directly). Instead, only the particle effects on the displacement map are visually seen. Heat input to a wexel affects the movement of nearby particles. There are two types of displacement involved in simulating a welding puddle which include Puddle and Displacement. Puddle is "temporary" and only lasts as long as there are particles and heat present. Displacement is "permanent". Puddle displacement is the liquid metal of the weld which changes rapidly (e.g., shimmers) and can be thought of as being "on top" of the Displacement. The particles overlay a portion of a virtual surface displacement map (i.e., a wexel map). The Displacement represents the permanent solid metal including both the initial base metal and the weld bead that has solidified.

The simulated welding process in virtual reality space works as follows: Particles stream from the emitter (emitter of the simulated mock welding tool 160) in a thin cone. The particles make first contact with the surface of the simulated welding coupon where the surface is defined by a wexel map. The particles interact with each other and the wexel map and build up in real-time. More heat is added the nearer a wexel is to the emitter. Heat is modeled in dependence on distance from the arc point and the amount of time that heat is input from the arc. Certain visuals (e.g., color, etc.) are driven by the heat. A weld puddle is drawn or rendered in virtual reality space for wexels having enough heat. Wherever it is hot enough, the wexel map liquefies, causing the Puddle displacement to "raise up" for those wexel locations. Puddle displacement is determined by sampling the "highest" particles at each wexel location. As the emitter moves on along the weld trajectory, the wexel locations left behind cool. Heat is removed from a wexel location at a particular rate. When a cooling threshold is reached, the wexel map solidifies. As such, the Puddle displacement is gradually converted to Displacement (i.e., a solidified bead). Displacement added is equivalent to Puddle removed such that the overall height does not change. Particle lifetimes are tweaked or adjusted to persist until solidification is complete. Certain particle properties that are modeled in the simulator **10** include attraction/repulsion, velocity (related to heat), dampening (related to heat dissipation), direction (related to gravity).

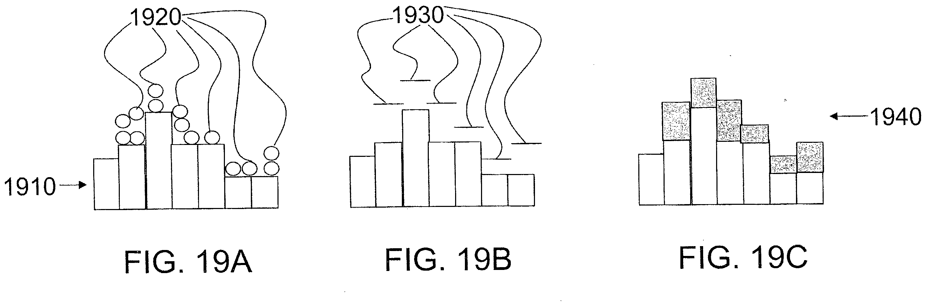

Figures 19a-19c illustrate an example of the concept of a dual-displacement (displacement and particles) puddle model of the simulator **10.** Welding coupons are simulated in virtual reality space having at least one surface. The surfaces of the welding coupon are simulated in virtual reality space as a double displacement layer including a solid displacement layer and a puddle displacement layer. The puddle displacement layer is capable of modifying the solid displacement layer.

As described herein, "puddle" is defined by an area of the wexel map where the Puddle value has been raised up by the presence of particles. The sampling process is represented in Figures 19a-19c. A section of a wexel map is shown having seven adjacent wexels. The current Displacement values are represented by un-shaded rectangular bars **1910** of a given height (i.e., a given displacement for each wexel). In Figure 19a, the particles **1920** are shown as round un-shaded dots colliding with the current Displacement levels and are piled up. In Figure 19b, the "highest" particle heights **1930** are sampled at each wexel location. In Figure 19c, the shaded rectangles **1940** show how much Puddle has been added on top of the Displacement as a result of the particles. The weld puddle height is not instantly set to the sampled values since Puddle is added at a particular liquification rate based on Heat. Although not shown in Figures 19a-19c, it is possible to visualize the solidification process as the Puddle (shaded rectangles) gradually shrink and the Displacement (un-shaded rectangles) gradually grow from below to exactly take the place of the Puddle. In this manner, real-time molten metal fluidity characteristics are accurately simulated. As a user practices a particular welding process, the user is able to observe the molten metal fluidity characteristics and the heat dissipation characteristics of the weld puddle in real-time in virtual reality space and use this information to adjust or maintain his welding technique.

The number of wexels representing the surface of a welding coupon is fixed. Furthermore, the puddle particles that are generated by the simulation to model fluidity are temporary, as described herein. Therefore, once an initial puddle is generated in virtual reality space during a simulated welding process using the simulator **10,** the number of wexels plus puddle particles tends to remain relatively constant. This is because the number of wexels that are being processed is fixed and the number of puddle particles that exist and are being processed during the welding process tend to remain relatively constant because puddle particles are being created and "destroyed" at a similar rate (i.e., the puddle particles are temporary). Therefore, the processing load of the logic processor-based subsystem **110** remains relatively constant during a simulated welding session.

Puddle particles may be generated within or below the surface of the welding coupon. In such a case, displacement may be modeled as being positive or negative with respect to the original surface displacement of a virgin (i.e., un-welded) coupon. In this manner, puddle particles may not only build up on the surface of a welding coupon, but may also penetrate the welding coupon. However, the number of wexels is still fixed and the puddle particles being created and destroyed is still relatively constant.

With alternate examples, instead of modeling particles, a wexel displacement map may be provided having more channels to model the fluidity of the puddle. Or, instead of modeling particles, a dense voxel map may be modeled. Or, instead of a wexel map, only particles may be modeled which are sampled and never go away. Such alternative examples may not provide a relatively constant processing load for the system, however.

Furthermore, in an example, blowthrough or a keyhole is simulated by taking material away. For example, if a user keeps an arc in the same location for too long, in the real world, the material would burn away causing a hole. Such real-world burnthrough is simulated in the simulator **10** by wexel decimation techniques. If the amount of heat absorbed by a wexel is determined to be too high by the simulator **10,** that wexel may be flagged or designated as being burned away and rendered as such (e.g., rendered as a hole). Subsequently, however, wexel reconstitution may occur for certain welding process (e.g., pipe welding) where material is added back after being initially burned away. In general, the simulator **10** simulates wexel decimation (taking material away) and wexel reconstitution (i.e., adding material back).

Furthermore, removing material in root-pass welding is properly simulated in the simulator 10. For example, in the real world, grinding of the root pass may be performed prior to subsequent welding passes. Similarly, simulator 10 may simulate a grinding pass that removes material from the virtual weld joint. It will be appreciated that the material removed is modeled as a negative displacement on the wexel map. That is to say that the grinding pass removes material that is modeled by the simulator 10 resulting in an altered bead contour. Simulation of the grinding pass may be automatic, which is to say that the simulator 10 removes a predetermined thickness of material, which may be respective to the surface of the root pass weld bead. In an alternate example, an actual grinding tool, or grinder, may be simulated that turns on and off by activation of the mock welding tool 160 or another input device. It is noted that the grinding tool may be simulated to resemble a real world grinder. In this example, the user maneuvers the grinding tool along the root pass to remove material responsive to the movement thereof. It will be understood that the user may be allowed to remove too much material. In a manner similar to that described above, holes or keyholes, or other defects (described above) may result if the user "grinds away" to much material. Still, hard limits or stops may be implemented, i.e. programmed, to prevent the user from removing to much material or indicate when too much material is being removed.

In addition to the non-visible "puddle" particles described herein, the simulator 10 also uses three other types of visible particles to represent Arc, Flame, and Spark effects. These types of particles do not interact with other particles of any type but interact only with the displacement map. While these particles do collide with the simulated weld surface, they do not interact with each other. Only Puddle particles interact with each other. The physics of the Spark particles is setup such that the Spark particles bounce around and are rendered as glowing dots in virtual reality space.

The physics of the Arc particles is setup such that the Arc particles hit the surface of the simulated coupon or weld bead and stay for a while. The Arc particles are rendered as larger dim bluish-white spots in virtual reality space. It takes many such spots superimposed to form any sort of visual image. The end result is a white glowing nimbus with blue edges.

The physics of the Flame particles is modeled to slowly raise upward. The Flame particles are rendered as medium sized dim red-yellow spots. It takes many such spots superimposed to form any sort of visual image. The end result is blobs of orange-red flames with red edges raising upward and fading out. Other types of non-puddle particles may be implemented in the simulator **10**. For example, smoke particles may be modeled and simulated in a similar manner to flame particles.

The final steps in the simulated visualization are handled by the vertex and pixel shaders provided by the shaders **117** of the GPUs **115.** The vertex and pixel shaders apply Puddle and Displacement, as well as surface colors and reflectivity altered due to heat, etc. The Extra (E) channel of the PHED wexel format, as discussed earlier herein, contains all of the extra information used per wexel. The extra information includes a non virgin bit (true=bead, false=virgin steel), a slag bit, an undercut value (amount of undercut at this wexel where zero equals no undercut), a porosity value (amount of porosity at this wexel where zero equals no porosity), and a bead wake value which encodes the time at which the bead solidifies. There are a set of image maps associated with different coupon visuals including virgin steel, slag, bead, and porosity. These image maps are used both for bump mapping and texture mapping. The amount of blending of these image maps is controlled by the various flags and values described herein.

A bead wake effect is achieved using a 1D image map and a per wexel bead wake value that encodes the time at which a given bit of bead is solidified. Once a hot puddle wexel location is no longer hot enough to be called "puddle", a time is saved at that location and is called "bead wake". The end result is that the shader code is able to use the 1D texture map to draw the "ripples" that give a bead its unique appearance which portrays the direction in which the bead was laid down. The simulator **10** is capable of simulating, in virtual reality space, and displaying a weld bead having a real-time weld bead wake characteristic resulting from a real-time fluidity-to-solidification transition of the simulated weld puddle, as the simulated weld puddle is moved along a weld trajectory.

In accordance with an alternative example, the simulator **10** is capable of teaching a user how to troubleshoot a welding machine. For example, a troubleshooting mode of the system may train a user to make sure he sets up the system correctly (e.g., correct gas flow rate, correct power cord connected, etc.) In accordance with another alternate example, the simulator **10** is capable of recording and playing back a welding session (or at least a portion of a welding session, for example, N frames). A track ball may be provided to scroll through frames of video, allowing a user or instructor to critique a welding session. Playback may be provided at selectable speeds as well (e.g., full speed, half speed, quarter speed). In accordance with an embodiment of the present invention, a split-screen playback may be provided, allowing two welding sessions to be viewed side-by-side, for example, on the observer display device 150. For example, a "good" welding session may be viewed next to a "poor" welding session for comparison purposes.

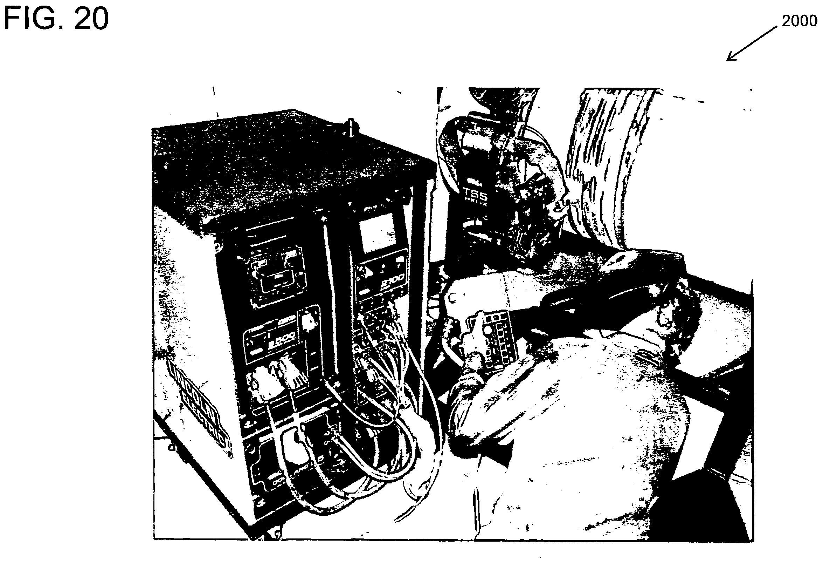

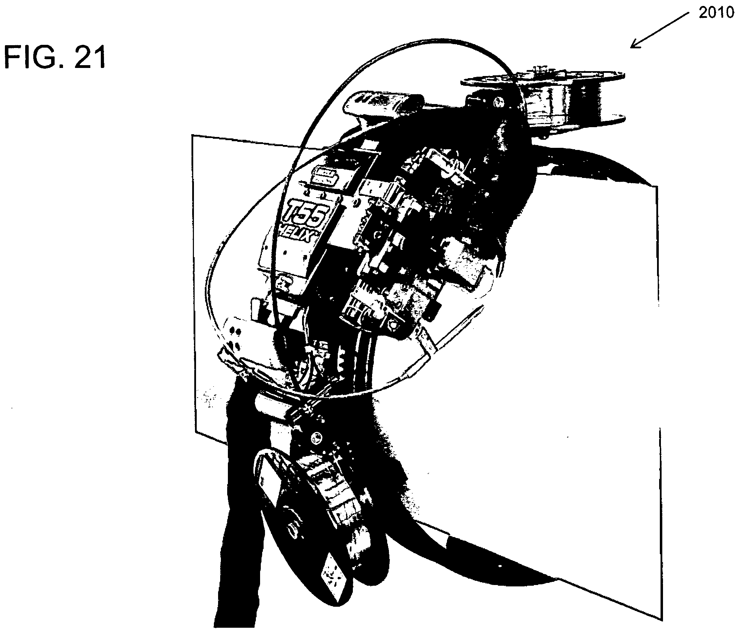

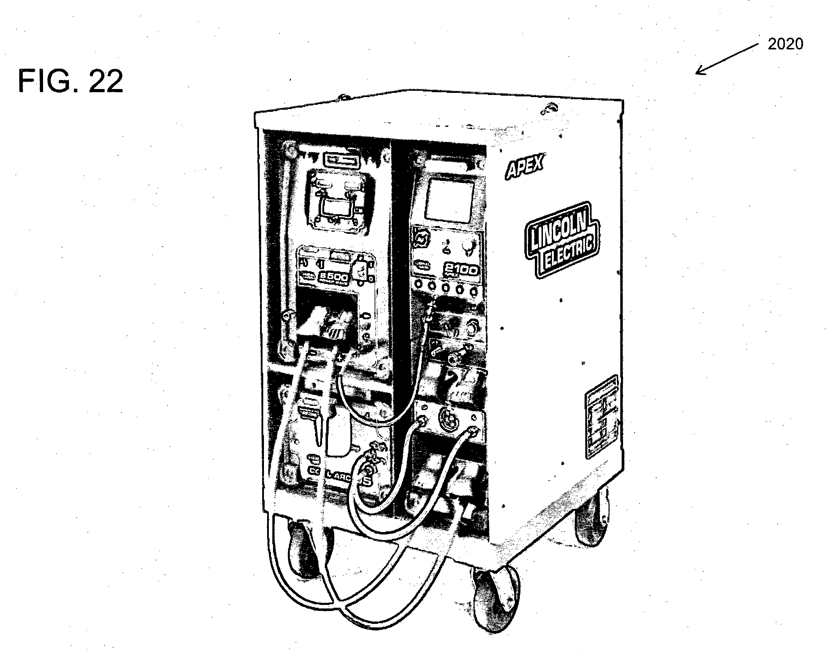

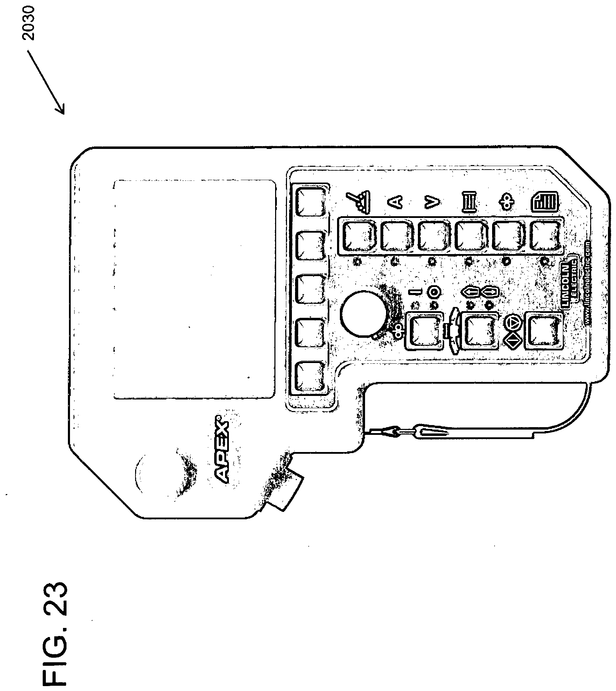

Automated welding is an embodiment of the present invention. One illustrative embodiment of automated welding is orbital welding, which is often used for the joining of tubes or pipes of various types of materials. For example, a TIG (GTAW) welding torch may be used to orbit around the pipes to be welded together by an automated mechanical system. Figure 20 illustrates an example embodiment of an orbital welding system as used in an orbital welding environment. An orbital welding system includes a welding tractor that travels around the pipes or tubes, a welding power source and controller, and a pendant providing operator control. Figure 21 shows the welding tractor 2010 of the orbital welding system of Figure 20, as operably connected to two pipes to be welded. Figure 22 shows a power source and controller 2020 of the orbital welding system of Figure 20, and Figure 23 shows a pendant 2030 of the orbital welding system of Figure 20.

As discussed above, GTAW/GMAW welding requires training to ensure that the operator understands the controls which are available for the practice of this process. There is a misconception that automation associated with orbital welding systems eliminates the need for training, since the machine is doing the welding. Automated orbital welding requires training to ensure the operator understands welding, and all of the unique setup and implementation skills for controlling TIG beads. This includes error correction, larger diameter pipe welding, the utilization of remote cameras, and proper error assessment and correction. Training programs offer inconsistent or insufficient coverage of teaching a good weld situation, a bad weld situation and the mechanisms to perform, react to or correct each. Instructors for this type of niche solution are hard to find with sufficient background and/or industry knowledge and experience. Only through quality training taught by certified instructors can operators of orbital welding equipment gain the complex skills needed to meet the strict acceptance criteria in today's welding environment. Additionally, on large circumference projects with long weld joints, the difficulty of maintaining attention and focus represents a significant problem.

In the GTAW process, an electric arc is maintained between the non-consumable tungsten electrode and the workpiece. The electrode supports the heat of the arc and the metal of the workpiece melts and forms the weld puddle. The molten metal of the workpiece and the electrode must be protected against oxygen in the atmosphere, thereby typically employing an inert gas such as argon as the shielding gas. If the addition of a filler metal is used, the filler wire can be fed to the weld puddle, where it melts due to the energy delivered by the electric arc. In accordance with one example, a virtual reality welding system is provided that incorporates technol ogy related to viewing a GTAW/GMAW automated welding operation, using a pendant (actual or virtual) or remote control as it relates to automated welding, identifying welding discontinuities based upon chosen welding parameter combinations, and correcting operator selections and combinations of parameters through the use of user screens to understand the interaction of various parameters and their impact on weld quality with proper terminology and visual elements related to automated welding.

By implementing orbital GTAW training in a virtual environment according to the present invention, a number of issues may be addressed. For example, industry and experience in orbital welding is based on the knowledge of the development company and therefore is consistent and updated to the latest technology and standards available, which is easily done by software upgrade in a virtual environment. The instructor becomes a facilitator to the program and does not need to be an orbital GTAW expert. Additional training aids, such as path following cues or visual overlays, improve transfer of training in a virtual environment. Orbital GTAW equipment, that can become outdated, does not need to be purchased. The virtual reality system can be used in a one-on-one training environment or a classroom type of setting.

The use of a virtual framework allows multiple pendants to be simulated with one training device. In implementing orbital GTAW in virtual reality, a pendant can be made as a physical device or as a virtual pendant. With the physical device, the student is able to interact with the controls and get the "feel" for the control. With a virtual pendant, where the controls are available and interacted with on a touch screen, the user can easily choose a variety of pendants for control, whether they are customized or company dependant. A virtual pendant also allows for different types of controls or levels to be enabled for use by the student depending on learning levels or controls available based on their industry level (mirroring field work experience). Unlike traditional training, randomized faults (e.g. wire nesting) can be implemented that provide the user a more detailed and complete experience without damage to the equipment or time-consuming setup.

Part of the learning interaction is the understanding of proper welding parameters based on the joint, preparation, material type, etc. In accordance with an embodiment, in virtual reality, theory enabled screens can be enabled to prompt a user with knowledge as to the proper choice to make. Additional screens or tables can be enabled to prompt a user with knowledge of what to input, but can also be enabled when a wrong choice is selected to highlight what was chosen and why it was incorrect, with the proper selections identified. This type of intelligent agent can ensure that the student does not perform incorrectly and become frustrated by the end result, positive reinforcement and learning being the key. An embodiment of the invention will also allow for the system or instructor to quiz user's knowledge and adapt the training curriculum and testing to the individual user's blind spots. An embodiment of the present invention employs artificial intelligence (Al) and a learning management system (LMS) to help with instruction in needed areas, reinforce knowledge, and provide learning assistance.

Setup parameters may include, but are not limited to: inert gas (e.g., Argon, Helium); arc ignition; welding current (e.g., pulsed vs. unpulsed); downslope functionality to avoid cratering at the end of the weld; torch rotation travel speed; wire feed characteristics (e.g., pulsed waveforms); wire diameter selection; arc voltage; distance between electrode and workpiece; welding oscillation control; remote control; cooling characteristics of the generally integrated closed-loop water cooling circuit; and weld cycle programming (often with four axes), etc.

Inspection and review of the weld is another aspect to the learning process. The student can view the weld and identify what is correct or wrong and, based on these choices, receive a score to identify whether they were right and further receive input on what is right or wrong based on industry standards. This can be enhanced further to identify how to correct these situations. For instance, with the correct amperage and speed (identified), the weld may be a good weld based on a particular industry standard.

As described above, a physical teach pendant or a hand-held control device for input selection in virtual reality welding may be provided. Alternatively, a virtual teach pendant device for control input selection for virtual reality welding may be provided. Interactions with the handheld or virtual device that are student learning level or industry role dependant that can be enabled on the device. Restricting controls or interactions based on the user may be provided to enhance learning objectives or reinforce industry role interactions, in accordance with an embodiment.

Teaching interaction or reactions based on visual, audible, or physical changes may be provided to ensure the user knows the proper set-up or error recovery. Also, teaching interaction or reactions based on visual, audible, or physical changes may be provided to ensure the user knows the proper changes in controls needed based on environmental or weld specific changes being made. Virtual calculators or tables may be enabled that allow input and provide an output based on values entered. Intelligent agent enabled results based on incorrect set-up parameters or choices may be provided to reinforce correct industry standards. Furthermore, intelligent agent enabled input to identify what the proper controls input should have been may be provided, based on the current visual, audio or physical indicators. In accordance with an embodiment, the simulation of camera based systems may be provided along with the creation of path following and path determinative systems based upon a fuzzy logic controller based system. For example, multiple renderings may be provided by simulating two camera views such that the camera views may be moved during the simulation. In accordance with an embodiment, an alarm may sound when the desired path is deviated from, based on the fuzzy logic, for example. Visualization of a simulated TIG weld puddle may be provided via pixel sizes that are small enough to provided proper visualization of the TIG weld puddle. Simulation of the magnification of the simulated TIG weld puddle may also be provided, for better visualization by the user.

Multiple levels of experience for the user that adapt to the skill level, learning pace and learning style of the user (LMS compatible) may be provided. Artificial intelligence (Al) based fault induction may also be provided in order to test the user's ability to detect, correct and recover from problems. The simulation of unsafe conditions, machine setup, and materials defects may be provided. Also, a multi-language capable system may be provided, allowing for harmonization of training for a global marketplace, in accordance with an embodiment. An embodiment of the present invention provides a virtual simulation environment allowing two or more users (multi-man) to create a virtual weld, such as in certain orbital welding scenarios.

The invention has been described herein with reference to the disclosed embodiments. Obviously, modifications and alterations will occur to others upon a reading and understanding of this specification. It is intended to include all such modifications and alterations insofar as they come within the scope of the appended claims.

## Claims

1. A simulator for facilitating virtual orbital welding activity, comprising:
a logic processor based subsystem operable to execute coded instructions for generating an interactive orbital welding environment that emulates welding setup and activity on a section of virtual pipe having at least one virtual weld joint, wherein the interactive welding environment models fluidity of a weld puddle responsive to performing the virtual welding activity in real-time;
displaying means operatively connected to the logic processor based subsystem for visually depicting the interactive welding environment with also welding pixels, wherein said displaying means depicts the section of virtual pipe and further wherein the displaying means depicts fluidity and heat dissipation characteristics of the weld puddle in real-time;
and wherein the logic processor based subsystem comprises welding pixel channels of information in the form of Puddle channel, Heat channel, Extra channel and Displacement channel, which contains four floating point numbers, wherein the Extra channel is treated as a set of bits which store logical information about the welding pixel such as, for example, whether or not there is any slag at the welding pixel location, wherein the Puddle channel stores a displacement value for any liquefied metal at the welding pixel location, wherein the Displacement channel stores a displacement value for the solidified metal at the welding pixel location, and wherein the Heat channel stores a value giving the magnitude of heat at the welding pixel location ; a pendant (2030) for performing set-up on the at least one virtual weld joint in real time;
wherein the virtual simulation environment is configured to allow two or more users to create a virtual weld in the orbital welding environment.

2. The simulator as defined in claim 1, wherein the input device emulates controls for input selection for virtual reality welding.

3. The simulator as defined in claim 2, wherein the logic processor based subsystem further comprises restricting controls or interactions based on a user to enhance learning objectives.

4. The simulator as defined in claim 3, wherein the logic processor based subsystem further comprises teaching interaction or reactions based on visual, audible, physical changes to ensure that said user can properly setup an orbital welding environment or can effect error recovery.

5. The simulator as defined in claim 4, wherein the logic processor based subsystem further comprises virtual calculators or tables that allow input and provide an output based on entered values.

6. The simulator as defined in claim 4, wherein the logic processor based subsystem further comprises intelligent agent-enabled results based on incorrect setup parameters or combination of parameters; and/or wherein the logic processor based subsystem further comprises intelligent agent-enabled input to identify the proper setup parameters or combination of parameters which should have been entered by the user; and/or which further comprises visual, audio or physical indicators of the setup parameters or combination of parameters.

7. The simulator as defined in claim 1, which further comprises a simulated camera-based system to track a path of the orbital weld,

8. The simulator as defined in claim 7, which further comprises path-following and path-determinative systems based upon a fuzzy logic controller-based system.

9. The simulator as defined in claim 1, wherein the logic processor based subsystem further comprises multiple levels for a user, each level adapted to the skill level, learning pace and learning style of the user, wherein the logic processor based subsystem further comprises artificial intelligence based fault instruction in order to test a user's ability to detect, correct and recover from problems; and/or wherein the logic processor based subsystem further comprises a simulation of unsafe conditions for machine setup and materials defects; and/or which comprises multi-language capabilities.

10. The simulator as defined in one of the claims 1 to 9,
wherein the logic processor based subsystem further comprises teaching interaction or reactions based on visual, audible, physical changes to ensure that said user can properly setup an orbital welding environment or can effect error recovery;
and further wherein the logic processor based subsystem further comprises virtual calculators or tables that allow input and provide an output based on entered values;
and further wherein the logic processor based subsystem further comprises intelligent agent-enabled results based on incorrect setup parameters or combination of parameters;
wherein the input device emulates controls for input selection for virtual reality welding.

11. The simulator as defined in claim 10, wherein the logic processor based subsystem further comprises intelligent agent-enabled input to identify the proper setup parameters or combination of parameters which should have been entered by the user; and/or which further comprises visual, audio or physical indicators of the setup parameters or combination of parameters.

12. The simulator as defined in claim 10, which further comprises a camera-based system to track a path of the orbital weld; and/or which further comprises path-following and path-determinative systems based upon a fuzzy logic controller-based system.

13. The simulator as defined in claim 10, wherein the logic processor based subsystem further comprises multiple levels for a user, each level adapted to the skill level, learning pace and learning style of the user.

14. The simulator as defined in claim 10, wherein the logic processor based subsystem preferably further comprises artificial intelligence based fault instruction in order to test a user's ability to detect, correct and recover from problems; wherein the logic processor based subsystem further comprises a simulationn of unsafe conditions for machine setup and materials defects.

15. The simulator of claim 10 which comprises multi-language capabilities.

## Patentansprüche

1. Simulator zur Ermöglichung einer virtuellen Orbitalschweißaktivität, umfassend:
ein logikprozessorbasiertes Teilsystem, das betreibbar ist, um codierte Anweisungen zur Erzeugung einer interaktiven Orbitalschweißumgebung auszuführen, die eine Schweißeinrichtung und -aktivität an einem Abschnitt eines virtuellen Rohres, das mindestens eine virtuelle Schweißnaht aufweist, emuliert, wobei die interaktive Schweißumgebung eine Fluidität eines Schweißbads in Abhängigkeit von einer Durchführung der virtuellen Schweißaktivität in Echtzeit modelliert;
Anzeigemittel, die mit dem logikprozessorbasierten Teilsystem betriebsfähig verbunden sind, zur visuellen Abbildung der interaktiven Schweißumgebung auch mit Schweißpixeln, wobei die Anzeigemittel den Abschnitt des virtuellen Rohres abbilden und wobei die Anzeigemittel ferner Fluiditäts- und Wärmeableitungseigenschaften des Schweißbads in Echtzeit abbilden;
und wobei das logikprozessorbasierte Teilsystem Schweißpixel-Informationskanäle in Form von Badkanal, Wärmekanal, Extrakanal und Verformungskanal umfasst, welche vier Gleitkommazahlen enthalten, wobei der Extrakanal als eine Reihe von Bits behandelt wird, welche logische Informationen über den Schweißpixel speichern, beispielsweise, ob Schlacke an der Schweißpixelposition vorhanden ist oder nicht, wobei der Badkanal einen Verformungswert für jedes verflüssigte Metall an der Pixelposition speichert, wobei der Verformungskanal einen Verformungswert für das verfestigte Metall an der Schweißpixelposition speichert und wobei der Wärmekanal einen Wert speichert, der den Betrag von Wärme an der Schweißpixelposition angibt;
eine Hängebedienungstafel (2030) zum Durchführen einer Einrichtung an der mindestens einen Schweißnaht in Echtzeit;
wobei die virtuelle Simulationsumgebung dafür ausgelegt ist, zwei oder mehr Benutzern zu ermöglichen, eine virtuelle Schweißverbindung in der Orbitalschweißumgebung zu erzeugen.

2. Simulator nach Anspruch 1, wobei die Eingabevorrichtung Steuerungen zur Eingabeauswahl für Virtual-Reality-Schweißarbeiten emuliert.

3. Simulator nach Anspruch 2, wobei das logikprozessorbasierte Teilsystem ferner eine Einschränkung von Steuerungen oder Interaktionen auf der Grundlage von einem Benutzer umfasst, um Lernziele zu fördern.

4. Simulator nach Anspruch 3, wobei das logikprozessorbasierte Teilsystem ferner Lehrinteraktionen oder -reaktionen auf der Grundlage von visuellen, auditiven, physikalischen Veränderungen umfasst, um sicherzustellen, dass der Benutzer eine Orbitalschweißumgebung ordnungsgemäß einrichten kann oder eine Fehlerbehebung ausführen kann.

5. Simulator nach Anspruch 4, wobei das logikprozessorbasierte Teilsystem ferner virtuelle Rechner oder Tabellen umfasst, die eine Eingabe zulassen und basierend auf eingegebenen Werten eine Ausgabe bereitstellen.

6. Simulator nach Anspruch 4, wobei das logikprozessorbasierte Teilsystem ferner durch einen intelligenten Agenten ermöglichte Ergebnisse auf der Grundlage von falschen Einrichtungsparametern oder Parameterkombinationen umfasst; und/oder wobei das logikprozessorbasierte Teilsystem ferner eine durch einen intelligenten Agenten ermöglichte Eingabe umfasst, um die passenden Einrichtungsparameter oder Parameterkombinationen, die durch den Benutzer eingegeben hätten werden sollen, zu identifizieren; und/oder welches ferner visuelle, auditive oder physische Indikatoren für die Einrichtungsparameter oder Parameterkombinationen umfasst.

7. Simulator nach Anspruch 1, der ferner ein simuliertes kamerabasiertes System zur Verfolgung eines Pfades der Orbitalschweißung umfasst.

8. Simulator nach Anspruch 7, der ferner pfadverfolgende und pfadvorgebende Systeme auf der Grundlage eines auf einer Fuzzylogiksteuerung basierenden Systems umfasst.

9. Simulator nach Anspruch 1, wobei das logikprozessorbasierte Teilsystem ferner mehrere Ebenen für einen Benutzer umfasst, wobei jede Ebene an den Kenntnisstand, das Lerntempo und den Lernstil des Benutzers angepasst ist, wobei das logikprozessorbasierte Teilsystem ferner Fehleranweisungen auf Basis künstlicher Intelligenz umfasst, um die Fähigkeit eines Benutzers zur Erkennung von, Behebung von und Wiederherstellung nach Problemen zu testen; und/oder wobei das logikprozessorbasierte Teilsystem ferner eine Simulation von unsicheren Bedingungen zur Maschineneinrichtung und von Materialdefekten umfasst; und/oder welches Mehrsprachigkeitsfähigkeiten umfasst.

10. Simulator nach einem der Ansprüche 1 bis 9,
wobei das logikprozessorbasierte Teilsystem ferner Lehrinteraktionen oder -reaktionen auf der Grundlage von visuellen, auditiven, physikalischen Veränderungen umfasst, um sicherzustellen, dass der Benutzer eine Orbitalschweißumgebung ordnungsgemäß einrichten kann oder eine Fehlerbehebung ausführen kann;
und wobei das logikprozessorbasierte Teilsystem ferner virtuelle Rechner oder Tabellen umfasst, die eine Eingabe zulassen und basierend auf eingegebenen Werten eine Ausgabe bereitstellen;
und wobei das logikprozessorbasierte Teilsystem ferner durch einen intelligenten Agenten ermöglichte Ergebnisse umfasst, die auf falschen Einrichtungsparametern oder Parameterkombinationen basieren;
wobei die Eingabevorrichtung Steuerungen zur Eingabeauswahl für Virtual-Reality-Schweißarbeiten emuliert.

11. Simulator nach Anspruch 10, wobei das logikprozessorbasierte Teilsystem ferner eine durch einen intelligenten Agenten ermöglichte Eingabe umfasst, um die passenden Einrichtungsparameter oder Parameterkombinationen, die durch den Benutzer eingegeben hätten werden sollen, zu identifizieren;
und/oder welches ferner visuelle, auditive oder physische Indikatoren für die Einrichtungsparameter oder Parameterkombinationen umfasst.

12. Simulator nach Anspruch 10, der ferner ein kamerabasiertes System zur Verfolgung eines Pfads der Orbitalschweißung umfasst; und/oder der ferner pfadverfolgende und pfadvorgebende Systeme auf der Grundlage eines auf einer Fuzzylogiksteuerung basierenden Systems umfasst.

13. Simulator nach Anspruch 10, wobei das logikprozessorbasierte Teilsystem ferner mehrere Ebenen für einen Benutzer umfasst, wobei jede Ebene an den Kenntnisstand, das Lerntempo und den Lernstil des Benutzers angepasst ist.

14. Simulator nach Anspruch 10, wobei das logikprozessorbasierte Teilsystem ferner vorzugsweise Fehleranweisungen auf Basis künstlicher Intelligenz umfasst, um die Fähigkeit eines Benutzers zur Erkennung von, Behebung von und Wiederherstellung nach Problemen zu testen; wobei das logikprozessorbasierte Teilsystem ferner eine Simulation von unsicheren Bedingungen zur Maschineneinrichtung und von Materialdefekten umfasst.

15. Simulator nach Anspruch 10, der Mehrsprachigkeitsfähigkeiten umfasst.

## Revendications

1. Simulateur pour faciliter une activité de soudage orbital virtuel, comprenant :
un sous-système basé sur processeur logique utilisable pour exécuter des instructions codées pour générer un environnement de soudage orbital interactif qui émule une configuration et une activité de soudage sur une section d'un tuyau virtuel comportant au moins un joint de soudage virtuel, dans lequel l'environnement de soudage interactif modélise une fluidité d'un bain de fusion en réponse à l'exécution de l'activité de soudage virtuel en temps réel ;
des moyens d'affichage reliés, de manière opérationnelle, au sous-système basé sur processeur logique pour la représentation visuelle de l'environnement de soudage interactif avec également des pixels de soudage, dans lequel lesdits moyens d'affichage représentent la section de tuyau virtuel et en outre dans lequel les moyens d'affichage représentent des caractéristiques de fluidité et de dissipation thermique du bain de fusion en temps réel ;
et dans lequel le sous-système basé sur processeur logique comprend des canaux d'informations de pixels de soudage sous la forme d'un canal de bain de fusion, d'un canal de chaleur, d'un canal supplémentaire et d'un canal de déplacement, contenant quatre nombres à virgule flottante, dans lequel le canal supplémentaire est traité en tant qu'un ensemble de bits mémorisant des informations logiques relatives au pixel de soudage comme, par exemple, s'il y a ou non un laitier à l'emplacement de pixel de soudage, dans lequel le canal de bain de fusion mémorise une valeur de déplacement pour tout métal liquéfié à l'emplacement de pixel de soudage, dans lequel le canal de déplacement mémorise une valeur de déplacement pour le métal solidifié à l'emplacement de pixel de soudage, et dans lequel le canal de chaleur mémorise une valeur donnant la grandeur de chaleur à l'emplacement de pixel de soudage ;
un médaillon (2030) pour effectuer une configuration de l'au moins un joint de soudage virtuel en temps réel ;
dans lequel l'environnement de simulation virtuelle est configuré pour permettre à au moins deux utilisateurs de créer un soudage virtuel dans l'environnement de soudage orbital.

2. Simulateur selon la revendication 1, dans lequel le dispositif d'entrée émule des commandes pour une sélection d'entrée pour un soudage de réalité virtuelle.

3. Simulateur selon la revendication 2, dans lequel le sous-système basé sur processeur logique comprend en outre des commandes de restriction ou des interactions sur la base d'un utilisateur pour améliorer des objectifs d'apprentissage.

4. Simulateur selon la revendication 3, dans lequel le sous-système basé sur processeur logique comprend en outre une interaction d'enseignement ou des réactions sur la base de changements visuels, audibles ou physiques pour s'assurer que ledit utilisateur peut correctement configurer un environnement de soudage orbital ou peut effectuer une reprise sur erreur.

5. Simulateur selon la revendication 4, dans lequel le sous-système basé sur processeur logique comprend en outre des calculateurs virtuels ou des tables virtuelles permettant une entrée et fournissant une sortie sur la base de valeurs entrées.

6. Simulateur selon la revendication 4, dans lequel le sous-système basé sur processeur logique comprend en outre des résultats générés par agent intelligent sur la base de paramètres de configuration incorrects ou d'une combinaison de paramètres ; et/ou dans lequel le sous-système basé sur processeur logique comprend en outre une entrée générée par agent intelligent pour identifier les paramètres de configuration corrects ou une combinaison de paramètres qui auraient dû être entrés par l'utilisateur ; et/ou qui comprend en outre des indicateurs visuels, audio ou physiques des paramètres de configuration ou d'une combinaison de paramètres.

7. Simulateur selon la revendication 1, comprenant en outre un système basé sur caméra simulé pour suivre un itinéraire du soudage orbital.

8. Simulateur selon la revendication 7, comprenant en outre des systèmes de suivi d'itinéraire et de détermination d'itinéraire sur la base d'un système basé sur organe de commande de logique floue.

9. Simulateur selon la revendication 1, dans lequel le sous-système basé sur processeur logique comprend en outre des niveaux multiples pour un utilisateur, chaque niveau étant adapté au niveau d'aptitude, au rythme d'apprentissage et au style d'apprentissage de l'utilisateur, dans lequel le sous-système basé sur processeur logique comprend en outre une instruction de défaut basée sur intelligence artificielle pour tester la capacité d'un utilisateur à la détection, la correction et la reprise sur problèmes ; et/ou dans lequel le sous-système basé sur processeur logique comprend en outre une simulation de conditions dangereuses pour une configuration de machine et des défauts de matériau ; et/ou qui comprend des capacités multilingues.

10. Simulateur selon l'une des revendications 1 à 9,
dans lequel le sous-système basé sur processeur logique comprend en outre une interaction d'enseignement ou des réactions basées sur des changements visuels, audibles ou physiques pour s'assurer que ledit utilisateur peut configurer correctement un environnement de soudage orbital ou peut effectuer une reprise sur erreur ;
et en outre dans lequel le sous-système basé sur processeur logique comprend en outre des calculateurs virtuels ou des tables virtuelles permettant une entrée et fournissant une sortie sur la base de valeurs entrées ;
et en outre dans lequel le sous-système basé sur processeur logique comprend en outre des résultats générés par agent intelligent sur la base de paramètres de configuration incorrects ou d'une combinaison de paramètres ;
dans lequel le dispositif d'entrée émule des commandes pour une sélection d'entrée pour un soudage de réalité virtuelle.

11. Simulateur selon la revendication 10, dans lequel le sous-système basé sur processeur logique comprend en outre une entrée générée par agent intelligent pour identifier les paramètres de configuration corrects ou une combinaison de paramètres qui auraient dû être entrés par l'utilisateur ; et/ou qui comprend en outre des indicateurs visuels, audio ou physiques des paramètres de configuration ou d'une combinaison de paramètres.

12. Simulateur selon la revendication 10, comprenant en outre un système basé sur caméra pour suivre un itinéraire du soudage orbital ; et/ou comprenant en outre des systèmes de suivi d'itinéraire et de détermination d'itinéraire sur la base d'un système basé sur un organe de commande de logique floue.

13. Simulateur selon la revendication 10, dans lequel le sous-système basé sur processeur logique comprend en outre des niveaux multiples pour un utilisateur, chaque niveau étant adapté au niveau d'aptitude, au rythme d'apprentissage et au style d'apprentissage de l'utilisateur.

14. Simulateur selon la revendication 10, dans lequel le sous-système basé sur processeur logique comprend en outre de préférence une instruction de défaut basée sur intelligence artificielle pour tester la capacité d'un utilisateur à la détection, la correction et la reprise sur problèmes ; dans lequel le sous-système basé sur processeur logique comprend en outre une simulation de conditions dangereuses pour une configuration de machine et des défauts de matériau.

15. Simulateur selon la revendication 10, comprenant des capacités multilingues.
